# EUROPÄISCHE PATENTSCHRIFT

(11) **EP 3 999 348 B1**
(45) Veröffentlichungstag und Bekanntmachung des Hinweises auf die Patenterteilung: **08.05.2024**
(21) Anmeldenummer: 20735430.9
(22) Anmeldetag: 06.07.2020
(51) Int. Cl.: B41J 3/407, G01N 1/06, B41J 3/01, G01N 35/00

(54) **DRUCKER ZUM BEDRUCKEN VON HISTOLOGIELABOR-VERBRAUCHSARTIKELN**
PRINTER FOR PRINTING ON HISTOLOGY-LABORATORY CONSUMABLE ARTICLES
IMPRIMANTE POUR IMPRIMER DES ARTICLES DE CONSOMMATION POUR LABORATOIRE D'HISTOLOGIE

(30) Priorität: 18.07.2019 LU 101311
(43) Veröffentlichungstag der Anmeldung: 25.05.2022
(73) Patentinhaber: Leica Biosystems Nussloch GmbH, 69226 Nussloch (DE)
(72) Erfinder: WESTERHOFF, Karl-Heinz, 75031 Eppingen (DE)
(74) Vertreter: Hoffmann, Jürgen
(86) Internationale Anmeldenummer: PCT/EP2020/068976
(87) Internationale Veröffentlichungsnummer: WO 2021/008919

(56) Entgegenhaltungen:
- DE-U1-202004 006 265
- US-A1- 2009 223 390

## Beschreibung

Die Erfindung betrifft einen Drucker zum Bedrucken von Histologielabor-Verbrauchsartikeln.

Von einem Patienten entnommene histologische Proben durchlaufen in einem histologischen Labor eine Vielzahl von Behandlungsschritten in verschiedenen Behandlungsstationen, bevor diese, beispielsweise mit einem Mikroskop, untersucht werden können.

Ziel der Behandlung einer histologischen Probe ist es zumeist, diese in einen Zustand zu versetzen, der ein Schneiden in dünne Schichten mit einem Mikrotom erlaubt. Diese Behandlung findet in mehreren Bearbeitungsstationen statt. Eine Schneidbarkeit kann beispielsweise dadurch ermöglicht werden, dass in mehreren, aufeinander folgenden Bearbeitungsschritten in das Gewebe ein mechanisch stabilisierendes Medium eingebracht (infiltriert) wird. Hierfür durchlaufen die Proben zumeist eine Vielzahl von Bearbeitungsstationen. Es sind beispielsweise Bearbeitungsstationen in Form von Zuschneidestationen, Fixierstationen, Dehydrierstationen, Reinigungsstationen, Infiltrationsstationen, Einbettstationen oder Mikrotomen (Schneidestationen) in verschiedensten Ausführungen bekannt. Das Fixieren, Dehydrieren, Reinigen und Infiltrieren kann beispielsweise nacheinander in einer Retorte eines einzigen Geräts erfolgen.

In einer Zuschneidestation wird das beispielsweise von einem Patienten entnommene Gewebe in einzelne Proben geschnitten. Die Proben werden zumeist in Kassetten eingelegt und zu einer Fixierstation transportiert. Eine Fixierung der Proben ist notwendig, weil die Sauerstoffversorgung der Zellen nach der Entnahme des Gewebes vom Patienten unterbunden ist, was zum Zelltod führt. Zuerst lässt sich ein Anschwellen der Zellen beobachten und zudem kommt es zu einer Proteindenaturierung und einer Autolyse mit anschließendem bakteriellen Verdau. Um diesen Schäden entgegenzuwirken, erfolgt in der Fixierstation eine Fixierung der entnommenen Proben mit einem Fixiermittel, wie beispielsweise Formalin.

Nach der Behandlung in der Fixierstation erfolgt eine Dehydrierung der Proben in einer Dehydrierstation. Eine Dehydrierung der Proben ist notwendig, um den nachfolgenden Prozess des Infiltrierens und des Einbettens zu ermöglichen. Da das Fixiermittel, insbesondere Formalin, zumeist ein wässriges Medium ist, während hingegen das zu verwendende Infiltrations- bzw. Einbettmittel, insbesondere Paraffin, zumeist ein mit Wasser nicht mischbares Medium ist, muss eine Dehydrierung der Proben vor der Weiterbehandlung der Proben in der Dehydrierstation erfolgen. Die Dehydrierung der Proben erfolgt mit Hilfe eines Dehydriermittels, wie beispielsweise Ethanol.

Vor einer Übergabe der Proben an die Infiltrationsstation werden diese außerdem gereinigt. Eine Reinigung ist notwendig, da der Alkohol im Gewebe der Probe mit Paraffin nicht mischbar ist. Der Alkohol muss daher vor dem Infiltrieren aus dem Gewebe entfernt und durch ein mit Paraffin mischbare Reagenz, wie Xylol ersetzt werden. Nach einer Behandlung der Probe in der Reinigungsstation wird diese zu einer Infiltrationsstation gebracht. In der Infiltrationsstation wird ein Infiltrationsmittel, das meistens dem später zum Einsatz kommenden Einbettmittel entspricht, in Hohlräume der Probe bis zur deren Sättigung eingebracht. Durch das Zuführen des Infiltrationsmittels können die Proben mechanisch stabilisiert werden.

Im Anschluss an die Behandlung der Probe in der Infiltrationsstation wird diese in der Einbettstation bearbeitet. In der Einbettstation erfolgt eine Einbettung der histologischen Probe in ein Einbettmittel, wie beispielsweise Paraffin oder Wachs. In der Praxis wird der Begriff "einbetten" doppelt gebraucht. Zum einen wird der Begriff als Synonym für "infiltrieren", das in der zuvor genannten Infiltrationsstation erfolgt, zum anderen wird der Begriff auch für das "Einblocken" gebraucht, was in der Einbettstation erfolgt.

Zum Einbetten werden die Proben aus der Kassette herausgenommen und in Formen, sogenannte Molds, zusammen mit der Kassette eingelegt, die mit dem Einbettmittel aufgefüllt werden. Anschließend erfolgt ein Abkühlen, so dass das Einbettmittel aushärten kann. Zum Kühlen werden die Formen (Molds) zumeist auf eine Kühlplatte der Einbettstation gesetzt. Im Ergebnis entsteht ein Einbettblock, in dem die Probe ortsfest an der Kassette fixiert ist. Nach einem Aushärten des Einbettmittels kann die Kassette in ein Mikrotom eingespannt und die Probe mit dem Mikrotom in einzelne dünne Probenschnitte geschnitten werden, die auf einem Objektträger abgelegt und in einem nächsten Schritt gefärbt und mit einem Mikroskop untersucht werden können.

Im Prozessablauf muss insbesondere sichergestellt sein, dass die Proben bzw. die Probenschnitte dem Patienten jederzeit zugeordnet werden können. Dazu werden in histologischen Labors spezielle Drucker verwendet, mit denen die Kassetten, in denen die Proben untergebracht werden sollen, und/oder die Objektträger, auf denen die Probenschnitte abgelegt werden, und/oder die Histologielabor-Verbrauchsartikel-Etiketten, insbesondere Klebeetiketten, insbesondere mit patientenrelevanten Daten bedruckt werden können. Hierbei ist es von großer Wichtigkeit, dass der Aufdruck ausreichend genau und ausreichend dauerhaft ablesbar ist.

Aus EP 1 245 395 A2 ist ein Verfahren und eine Vorrichtung zum Bedrucken von Kunststoff-Kassetten für histologische Präparate und/oder von Objektträgern für mikroskopische Dünnschnitte beschrieben. Die Vorrichtung weist eine Rechnereinrichtung zum Steuern der Druckeinrichtung auf. Die Druckeinrichtung beinhaltet einen Tintenstrahldrucker zum Bedrucken der Kassetten und/oder der Objektträger. Die Tinte wird über eine Warmlufttrocknung vorgetrocknet und über eine Blitzeinrichtung durchgetrocknet.

Aus US 2019/0105021 A1 ist ein System zum Identifizieren einer Kennung auf einer Gewebekassette in einer Anordnung mehrerer Gewebekassetten bekannt. Das System weist einen Sensor auf, der automatisch eine Kennung auf einer einzelnen Gewebekassette oder ein Bild der mehreren Gewebekassetten in der Anordnung erfasst. Das System kann einen Prozessor enthalten, der eine Kennung mit einem Gewebeverarbeitungsprotokoll vergleichen kann.

DE 20 2004 006 265 U1 offenbart ein Mikrotom, das einen Objektträgerdrucker beinhaltet. Darüber hinaus weist das Mikrotom eine Kassettenkodierungsleseeinrichtung auf.

US 2009/223390 A1 offenbart eine Vorrichtung zum Drucken von Informationen auf Glasoberflächen, die einen Objektträgerdrucker aufweist. Die Vorrichtung weist außerdem einen 2D-Barcode-Scanner auf, an dem die Kassetten vorbei geführt werden. Die jeweils von der Kassette abgelesene Information wird an eine Steuereinrichtung übergeben. Die Steuereinrichtung erzeugt daraufhin Druckdaten zum Bedrucken eines Objektträgers und übergibt diese an den Objektträgerdrucker.

Es ist die Aufgabe der vorliegenden Erfindung, einen Drucker zum Bedrucken von Histologielabor-Verbrauchsartikeln anzugeben, der die Sicherheit des Prozessablaufs bei der Bearbeitung von histologischen Proben erhöht.

Die Aufgabe wird durch einen Drucker zum Bedrucken von Histologielabor-Verbrauchsartikeln nach dem Anspruch 1 gelöst.

Die Erfindung hat den ganz besonderen Vorteil, dass die Zuordenbarkeit des Histologielabor-Verbrauchsartikels zu einer bestimmten Probe bzw. zu einem bestimmten Patienten gewährleistet ist. Es wurde erkannt, dass es für die Zuordenbarkeit des Histologielabor-Verbrauchsartikels zu einer bestimmten Probe bzw. zu einem bestimmten Patienten insbesondere darauf ankommt, die zum Einsatz kommenden Histologielabor-Verbrauchsartikel korrekt und ausreichend dauerhaft jeweils mit einem spezifischen Aufdruck zu versehen.

In erfindungsgemäßer Weise ist insoweit vorgesehen, dass der Drucker bereits vorab feststellt, ob der jeweils vorgesehene Histologielabor-Verbrauchsartikel zuverlässig mit einem dauerhaft gut ablesbaren Aufdruck versehen werden kann und/oder dass der Drucker den bereits aufgebrachten Aufdruck nach dem Aufbringen selbst überprüft.

In erfindungsgemäßer Weise wurde u.a. erkannt, dass unterschiedliche Kassetten, beispielsweise Kassetten unterschiedlicher Hersteller oder Kassetten, die in unterschiedlichen Produktionsprozessen hergestellt wurden, ganz unterschiedliche Eigenschaften in Bezug auf die exakte Aufbringbarkeit und Haltbarkeit eines Aufdrucks aufweisen. Insbesondere kann es beispielsweise sein, dass die Kassetten eines ersten Herstellers besonders gut und dauerhaft unter bestimmten Druckparametern mit einer bestimmten Tinte bedruckt werden können, während das Bedrucken von Kassetten eines anderen Herstellers unter denselben Druckparametern und mit derselben Tinte zu mangelhaften Ergebnissen führt. Insbesondere kann es nachteiliger Weise beispielsweise vorkommen, dass der Aufdruck unscharf ist, es zu Verwischungen kommt oder der Aufdruck nicht ausreichend dauerhaft ist, wenn auf eine für die eingestellten Druckparameter und/oder die verwendete Tinte nicht ausreichend gut geeignete Kassette gedruckt wird. Dies kann beispielsweise darauf zurückzuführen sein, dass die Kassetten unterschiedlicher Hersteller oder unterschiedlicher Produktserien aus unterschiedlichen Materialien oder Materialmischungen, insbesondere aus unterschiedlichen Kunststoffen, hergestellt sind.

Hierbei ist es eine ganz besondere Schwierigkeit, dass der Benutzer in aller Regel den verwendeten Kassetten nicht unmittelbar ansehen kann, ob mit dem von ihm verwendeten Drucker und der von ihm verwendeten Tinte ein qualitativ ausreichend guter Aufdruck möglich ist. Insbesondere kann es nachteiliger Weise vorkommen, dass in großen Stückzahlen qualitativ nicht ausreichend gute Aufdrucke hergestellt werden, ohne dass das Laborpersonal die Mangelhaftigkeit der Aufdrucke unmittelbar bemerkt.

Gleiches gilt analog wenn es darum geht, andere Arten von Histologielabor-Verbrauchsartikeln, beispielsweise Objektträger, zu bedrucken.

Der erfindungsgemäße Drucker hat den ganz besonderen Vorteil, dass mittels der optischen Lesevorrichtung vorab festgestellt werden kann, ob der jeweils zu bedruckende Histologielabor-Verbrauchsartikel mit ausreichender Qualität bedruckt werden kann. Hierzu liest der Drucker mittels der optischen Lesevorrichtung ein Bildmuster, das beispielsweise ein Hersteller- oder Produkt-Logo sein kann, von dem jeweils zu bedruckenden Histologielabor-Verbrauchsartikel ab und übergibt entsprechende analoge oder digitale Bildmuster-Bildsignale bezüglich des abgelesenen Bildmusters an eine Steuerungsvorrichtung. Stellt die Steuerungsvorrichtung nach einer Auswertung der empfangenen Bildsignale beispielsweise fest, dass der Histologielabor-Verbrauchsartikel einen bestimmten Hersteller und/oder einer bestimmten Produktserie zuzuordnen ist, kann sie im nächsten Schritt festlegen ob und/oder mit welchen Druckparametern ein Aufdrucken erfolgen soll. Hierfür ist es von Vorteil, wenn in einem Speicher der Steuerungsvorrichtung die relevanten Daten bezüglich der Histologielabor-Verbrauchsartikel unterschiedlicher Hersteller oder unterschiedlicher Produktserien hinterlegt sind.

Es ist insbesondere auch möglich, dass die Steuerungsvorrichtung feststellt, dass ein Histologielabor-Verbrauchsartikel, von dem gerade ein Bildmuster abgelesen wurde, nicht mit ausreichender Qualität bedruckt werden kann; dies beispielsweise, weil ein Histologielabor-Verbrauchsartikel verwendet wird, der mit den eingestellten Druckparametern und/oder der verwendeten Tinte nicht kompatibel ist. In diesem Fall kann beispielsweise der Aufdruck verweigert werden oder alternativ eine Warnung an das Laborpersonal ausgegeben werden. In einem solchen Fall kann alternativ auch vorgesehen sein, dass ein Aufdrucken erst nach Ausgabe einer Warnmeldung und nach einer Bestätigung durch das Laborpersonal, dass ein Bedrucken dennoch gewünscht ist, erfolgt. Entsprechend kann vorsichtshalber auch dann so verfahren werden, wenn ein zu bedruckender Histologielabor-Verbrauchsartikel kein für die optische Lesevorrichtung erfassbares Bildmuster aufweist oder wenn einem erfassten Bildmuster kein Hersteller und/oder keine Produktserie zugeordnet werden kann.

Ganz allgemein kann vorteilhaft vorgesehen sein, dass die Steuerungsvorrichtung die empfangenen Bildmuster-Bildsignale auswertet und in Abhängigkeit des Auswerteergebnisses wenigstens einen Bearbeitungsschritt für die weitere Bearbeitung des Histologielabor-Verbrauchsartikels festlegt.

Die Festlegung der weiteren Bearbeitungsschritte ist nicht zwingend abschließend. Beispielsweise kann die Steuerungsvorrichtung als Bearbeitungsschritt zunächst festlegen, dass eine Eingabe des Benutzers verlangt wird. Nach dem Erhalt der Eingabe und je nach der Entscheidung des Benutzers kann die Steuerungsvorrichtung dann weitere Bearbeitungsschritte festlegen.

Die Anforderung einer Eingabe von einem Benutzer kann insbesondere erfolgen, wenn ein zu bedruckender Histologielabor-Verbrauchsartikel in den Drucker eingegeben wurde, der mit den Druckparametern des Druckers nicht kompatibel ist oder wenn ein zu bedruckender Histologielabor-Verbrauchsartikel kein für die optische Lesevorrichtung erfassbares Bildmuster aufweist oder wenn einem erfassten Bildmuster bei der Auswertung kein Hersteller und/oder keine Produktserie zugeordnet werden kann. Die aktuellen Druckparameter des Druckers können beispielsweise die Tinte oder den Toner oder eine Trocknungstemperatur oder eine Trocknungsdauer oder eine zu verwendende Schriftgröße oder eine zu verwendende Schriftart betreffen.

Der Drucker kann eine Taste oder ein Tastenfeld und/oder eine andere Eingabevorrichtung aufweisen, mittels der der Benutzer eine Eingabe machen kann. Es ist alternativ oder zusätzlich auch möglich, dass die Eingabe über einen Computer eingegeben wird, an den der Drucker direkt oder über ein Netzwerk angeschlossen ist. Die Steuerungsvorrichtung wertet die Eingabe aus und kann dann in Abhängigkeit von dem Inhalt der Eingabe einen bereits festgelegten Bearbeitungsschritt löschen und/oder wenigstens einen weiteren Bearbeitungsschritt für die weitere Bearbeitung des Histologielabor-Verbrauchsartikels festlegen.

Beispielsweise kann die Steuerungsvorrichtung den ursprünglich vorgesehenen Bearbeitungsschritt des Aufbringens eines Aufdrucks löschen, wenn der Benutzer eingegeben hat, dass eine Bedruckung des Histologielabor-Verbrauchsartikels, bezüglich dem eine Eingabe angefordert wurde, nicht erfolgen soll.

Bei einer ganz besonders vorteilhaften Ausführung kann die Steuerungsvorrichtung die weitere Bearbeitung eines Histologielabor-Verbrauchsartikels, bezüglich dem eine Eingabe erwartet wird, bis zum Eintreffen der Eingabe stoppen und stattdessen die Bearbeitung wenigstens eines anderen Histologielabor-Verbrauchsartikels beginnen oder fortsetzen. Diese Ausführung hat den ganz besonderen Vorteil, dass die zum Bedrucken einer Vielzahl von Histologielabor-Verbrauchsartikeln zur Verfügung stehende Zeit stets ausgenutzt wird. Insbesondere kann vorteilhaft vorgesehen sein, dass ein Histologielabor-Verbrauchsartikel, bei dem eine Eingabe erwartet wird, vorrübergehen aussortiert und in einer Zwischenparkposition überführt wird. Sobald die erforderliche Eingabe erfolgt ist, wird der Histologielabor-Verbrauchsartikel von der Zwischenparkposition zurückgeholt und dann, insbesondere in Abhängigkeit von der erfolgten Eingabe, entweder weiterbearbeitet und mit einem vorgegebenen oder individuell vorgebbaren Aufdruck versehen oder ausgeworfen, ohne einen Aufdruck aufzubringen.

Es ist möglich, dass einer der Bearbeitungsschritte beinhaltet, eine Nachricht an einen Benutzer auszugeben. Beispielsweise kann der erfindungsgemäße Drucker derart eingerichtet sein, dass die Steuerungsvorrichtung die Nachricht ausgibt, dass alles in Ordnung ist und ein ordnungsgemäßer Aufdruck erfolgen kann, wenn die Steuerungsvorrichtung den zu bedruckenden Histologielabor-Verbrauchsartikel erkannt hat und festgestellt hat, dass ein qualitativ hochwertiger Aufdruck möglich ist. Analog ist es auch möglich, dass eine Warnmeldung ausgeben wird, wenn die Steuerungsvorrichtung erkannt hat, dass ein qualitativ ausreichend guter Aufdruck nicht möglich ist oder wenn die Steuerungsvorrichtung dem erfassten Bildmuster bei der Auswertung keinen Hersteller und/oder keine Produktserie zuordnen konnte.

Insbesondere kann ein von der Steuerungsvorrichtung festgelegter Arbeitsschritt beinhalten, den Histologielabor-Verbrauchsartikel, dessen Bildmuster abgelesen und ausgewertet wurde, mit einem vorgegebenen oder individuell vorgebbaren Aufdruck zu bedrucken. Diesen Bearbeitungsschritt legt die Steuerungsvorrichtung beispielsweise dann fest, wenn sie das von dem Histologielabor-Verbrauchsartikel abgelesene Bildmuster einem bestimmten Hersteller und/oder einer bestimmten Produktserie zuordnen konnte, von der die Steuerungsvorrichtung die Information hat, dass ein Bedrucken mit den eingestellten Druckparametern in qualitativ ausreichend hochwertiger Weise möglich ist.

Insbesondere zu diesem Zweck kann eine Zuordnung von unterschiedlichen Bildmustern zu der Information, ob ein qualitativ ausreichend hochwertiger Aufdruck möglich ist oder nicht, in einer Speichereinrichtung der Steuerungsvorrichtung abgelegt sein.

Alternativ oder zusätzlich kann auch vorgesehen sein, dass die Zuordnung, die in einer Speichereinrichtung der Steuerungsvorrichtung abgelegt ist, noch detailliertere Informationen, beispielsweise Informationen über erforderliche Druckparameter beinhalten. Die erforderlichen Druckparamater können beispielsweise Eigenschaften der vorteilhaft zu verwendenden Tinte oder eine Trocknungstemperatur oder eine Trocknungsdauer oder eine Information über Dauer und/oder Temperatur einer Warmluftvortrocknung oder über eine Temperatur und Dauer einer Durchtrocknung in einer Blitzeinrichtung oder über eine zu verwendende Schriftgröße oder eine zu verwendende Schriftart, betreffen.

Bei einer besonders flexibel einsetzbaren Ausführung des erfindungsgemäßen Druckers passt die Steuerungsvorrichtung wenigstens einen Druckparameter des Druckers an die als erforderlich ermittelten Druckparameter individuell an.

Insbesondere kann vorteilhaft vorgesehen sein, dass der Drucker jeden Histologielabor-Verbrauchsartikel mittel der optischen Lesevorrichtung nach Bildmustern untersucht und für den Fall, dass ein Ausdruck erfolgen soll, mit einem vorgegebenen oder individuell jeweils vorgebbaren Aufdruck versieht. Beispielsweise kann vorteilhaft vorgesehen sein, dass der Drucker die Information über den individuell aufzubringenden Aufdruck, der insbesondere Patientendaten beinhalten kann, von einem übergeordneten Computer erhält, an den der Drucker direkt oder über ein Netzwerk angeschlossen ist.

Wie bereits erwähnt, kann es auch vorkommen, dass einer der von der Steuerungsvorrichtung festgelegten Bearbeitungsschritte beinhaltet, den Histologielabor-Verbrauchsartikel auszuwerfen ohne ihn zu bedrucken. Dies kann insbesondere in Kombination mit der Ausgabe einer Warnmeldung an den Benutzer, beispielsweise auf einem Display des Druckers, und/oder an einen angeschlossenen Computer erfolgen.

Bei einer ganz besonders vorteilhaften Ausführung führt die Steuerungsvorrichtung ein Protokoll. Insbesondere kann vorteilhaft vorgesehen sein, dass für jeden einzelnen eingelegten Histologielabor-Verbrauchsartikel protokolliert wird, ob ein Bildmuster abgelesen werden konnte und/oder ob ein abgelesenes Bildmuster ausgewertet werden konnte und/oder ob ein abgelesenes Bildmuster einem Hersteller oder einer Produktserie zugeordnet werden konnte und/oder ob ein Aufdruck erfolgt ist. Das Protokoll kann insbesondere das Bildmuster als solches und/oder Daten bezüglich des vorgenommenen Aufdrucks beinhalten. Darüber hinaus kann das Protokoll Informationen über den Zeitpunkt der Bearbeitung des jeweiligen Histologielabor-Verbrauchsartikels und/oder über einen zugeordneten Patienten und/oder die Chargennummer des verwendeten Druckmediums und/oder die Chargennummer des verwendeten Histologielabor-Verbrauchsartikels beinhalten.

Vorzugsweise legt die Steuerungsvorrichtung die Protokolldaten fortlaufend in einem Speicher ab und/oder gibt die Protokolldaten über eine Schnittstelle aus. Es ist alternativ oder zusätzlich auch möglich, dass die Steuerungsvorrichtung die Protokolldaten auf einer Ausgabevorrichtung, beispielsweise einem Display des Druckers, anzeigt, insbesondere fortlaufend anzeigt.

Bei einer Variante erfolgt eine Protokollierung ausschließlich nur in den als problematisch erkannten Fällen, beispielsweise weil kein Bildmuster abgelesen werden konnte oder weil sich nach der Auswertung ergeben hat, dass ein Aufdruck nicht mit ausreichend guter Qualität erfolgen konnte.

Insbesondere kann einer der Bearbeitungsschritte beinhalten, die Bildsignale des abgelesenen Bildmusters zu speichern und/oder eine durch die Steuerungsvorrichtung ermittelte Information über den Histologielabor-Verbrauchsartikel zu speichern. Dies kann insbesondere in der Weise erfolgen, dass eine Ablage der entsprechenden Daten in dem oben bereits erwähnten Protokoll erfolgt.

Bei einer ganz besonders vorteilhaften Ausführung vergleicht die Steuerungsvorrichtung die von der optischen Lesevorrichtung empfangenen Bildmuster-Bildsignale mit den Bildsignalen wenigstens eines Referenzbildmusters. Hierzu kann eine Speichervorrichtung vorhanden sein, in der Bildsignale wenigstens eines Referenzbildmusters gespeichert sind oder speicherbar sind. Die Steuerungsvorrichtung kann die Referenzbildmuster einzeln aus der Speichervorrichtung abrufen und mit den von der optischen Lesevorrichtung empfangenen Bildmuster-Bildsignalen vergleichen.

Wie bereits erwähnt, kann vorteilhaft vorgesehen sein, dass die Steuerungsvorrichtung aufgrund der Bildmuster-Bildsignale ermittelt, ob und gegebenenfalls wie, insbesondere mit welchen Druckparametern, der jeweilige Histologielabor-Verbrauchsartikel zu bedrucken ist.

Bei einer besonders flexiblen Ausführung ermittelt die Steuerungsvorrichtung aufgrund der Bildmuster-Bildsignale, wo sich ein Druckfeld auf dem Histologielabor-Verbrauchsartikel befindet. Wenn festgestellt wird, dass ein Aufdruck erfolgen soll, veranlasst die Steuerungsvorrichtung, dass das Bedrucken exakt in das Druckfeld erfolgt. Bei einer solchen Ausführung des erfindungsgemäßen Druckers können besonders flexibel ganz unterschiedliche Histologielabor-Verbrauchsartikel verwendet werden.

Die optische Lesevorrichtung kann insbesondere dazu ausgebildet und angeordnet sein, ein als Barcode oder als QR-Code oder als Logo oder als Schriftzug ausgebildetes Bildmuster abzulesen. Hinsichtlich der Art der ablesbaren Bildmuster gibt es keine grundsätzlichen Beschränkungen.

Bei einer ganz besonders vorteilhaften Ausführung ist es insbesondere nicht erforderlich, dass die Bildmuster stets an dem gleichen Ort der Histologielabor-Verbrauchsartikel angeordnet sind. Vielmehr wird bei dieser Ausführung mittels der optischen Lesevorrichtung der gesamte Histologielabor-Verbrauchsartikel erfasst, um festzustellen, wo sich ein auswertbares Bildmuster befindet.

Vorzugsweise weist der erfindungsgemäße Drucker eine Aufnahme für eine Vielzahl von zu bedruckenden Histologielabor-Verbrauchsartikeln auf, aus der eine Transportvorrichtung die zu bedruckenden Histologielabor-Verbrauchsartikeln einzeln entnimmt und weiter transportiert. Hierbei kann vorteilhaft insbesondere vorgesehen sein, dass die optische Lesevorrichtung das Bildmuster jeweils während des Transports zu der Druckeinrichtung abliest.

Wie bereits erwähnt kann der Histologielabor-Verbrauchsartikel beispielsweise eine Kassette für Gewebeproben oder ein Objektträger, insbesondere für Dünnschnitte, sein. Insoweit kann der Drucker speziell als Kassettendrucker und/oder als Objektträgerdrucker ausgebildet sein.

Der erfindungsgemäße Drucker kann insbesondere als Tintenstrahldrucker oder als Laserdrucker ausgebildet sein.

Wie bereits erwähnt kann vorteilhaft vorgesehen sein, dass die optische Lesevorrichtung ein von der Druckeinrichtung auf einen Histologielabor-Verbrauchsartikel aufgedruckten Aufdruck abliest, analoge oder digitale Aufdruck-Bildsignale bezüglich des abgelesenen Aufdrucks erzeugt und die Aufdruck-Bildsignale an eine Steuerungsvorrichtung des Druckers übergibt. Auf dieser Weise kann der Drucker den bereits aufgebrachten Aufdruck nach dem Aufbringen selbst dahingehend überprüfen, ob der jeweilige Aufdruck einwandfrei erfolgt ist.

Hierdurch wird vorteilhaft sichergestellt, dass das Ablesen des Aufdrucks maschinell und/oder durch eine Person während der nachfolgenden Prozessschritte bei der Bearbeitung der Probe stets zuverlässig erfolgen kann.

Nach diesem Erfindungsgedanken ist es ermöglicht zu erkennen, ob der Aufdruck mit einer für ein späteres Ablesen durch eine Person und/oder durch einen Automaten ausreichenden Qualität erfolgt ist. Sollte sich beispielsweise herausstellen, dass der Aufdruck unscharf und/oder verwischt ist, kann beispielsweise eine Warnmeldung ausgegeben werden. Es ist alternativ oder zusätzlich beispielsweise auch möglich, einen fehlerhaft bedruckten Histologielabor-Verbrauchsartikel auszusortieren, das Aufdrucken des gewünschten Aufdrucks auf einen anderen Histologielabor-Verbrauchsartikel zu wiederholen, um so den Histologielabor-Verbrauchsartikel mit dem fehlerhaften Aufdruck durch den anderen Histologielabor-Verbrauchsartikel mit einem einwandfreien Aufdruck zu ersetzen.

Der Aufdruck, den der Drucker aufbringt, kann einfarbig oder alternativ auch mehrfarbig sein.

Bei einer besonders zuverlässigen Ausführung wertet die Steuerungsvorrichtung die von der optischen Lesevorrichtung empfangenen Aufdruck-Bildsignale aus. Dies kann vorteilhaft beispielsweise durch ein Vergleichen der empfangenen Aufdruck-Bildsignale mit den analogen oder digitalen Bildsignalen des zugehörigen Sollaufdruckbildmusters erfolgen. Insbesondere kann vorteilhaft vorgesehen sein, dass die Steuerungsvorrichtung die von der optischen Lesevorrichtung empfangenen Aufdruck-Bildsignale mit den Bildsignalen des Sollaufdruckbildmusters durch Bildanalyse und/oder durch Mustererkennung vergleicht.

Der Drucker kann die analogen oder digitalen Bildsignale des Sollaufdruckbildmusters, das in Klarschrift oder in codierter Form insbesondere Patientendaten beinhalten kann, beispielsweise von einem übergeordneten Computer erhalten, an den der Drucker direkt oder über ein Netzwerk angeschlossen ist.

Vorzugsweise steuert die Steuerungsvorrichtung die Druckeinrichtung des Druckers so, dass ein Aufdruck auf den jeweiligen Histologielabor-Verbrauchsartikel aufgedruckt wird, der zu dem jeweiligen Sollaufdruckbildmuster möglichst gleich ist.

Bei einer ganz besonders vorteilhaften Ausführung ermittelt die Steuerungsvorrichtung wenigstens einen Qualitätsparameter bezüglich des Aufdrucks. Das Ermitteln wenigstens eines Qualitätsparameters kann insbesondere durch das oben erwähnte Vergleichen der Bilddaten des Aufdrucks mit den Bilddaten des Sollaufdruckbildmusters und/oder durch eine Bildanalyse erfolgen. Der Qualitätsparameter kann insbesondere die Schärfe des Aufdrucks und/oder den Kontrast des Aufdrucks und/oder die Druckauflösung des Aufdrucks und/oder die Exaktheit der Farbe bzw. der Farben des Aufdrucks und/oder die Konstanz der Farben bzw. der Farben des Aufdrucks und/oder dem Farbverlauf des Aufdrucks und/oder die Lage des Aufdrucks auf dem Histologielabor-Verbrauchsartikel betreffen. Qualitätsparameter kann insbesondere auch das Vorhandensein des Aufdrucks auf dem Histologielabor-Verbrauchsartikel betreffen. Sollte sich herausstellen, dass ein Aufdruck gar nicht erfolgt ist, kann beispielsweise eine Warnmeldung ausgegeben und/oder eine, insbesondere automatische, Überprüfung der Druckeinrichtung, insbesondere des Füllstandes mit Tinte bzw. Toner, durchgeführt werden.

Analog wie in Bezug auf die Auswertung des Bildmusters kann die Steuerungsvorrichtung in Abhängigkeit von dem Auswerteergebnis wenigstens einen Bearbeitungsschritt für die weitere Bearbeitung des Histologielabor-Verbrauchsartikels innerhalb des Druckers festlegen.

Die Festlegung wenigstens eines Bearbeitungsschritts ist, wie bereits erwähnt, nicht zwingend abschließend. Beispielsweise kann die Steuerungsvorrichtung als Bearbeitungsschritt zunächst festlegen, dass eine Eingabe des Benutzers verlangt wird. Nach dem Erhalt der Eingabe und je nach der Entscheidung des Benutzers kann die Steuerungsvorrichtung dann weitere Bearbeitungsschritte festlegen.

Die Anforderung einer Eingabe von einem Benutzer kann insbesondere erfolgen, wenn festgestellt wurde, dass ein Aufdruck nicht, oder nicht einwandfrei erfolgt ist. In diesem Fall kann beispielsweise vorgesehen sein, dass der Benutzer den Histologielabor-Verbrauchsartikel in Augenschein nimmt und entweder freigibt oder eine Druckwiederholung des Sollaufdruckbildmusters auf einem anderen Histologielabor Verbrauchsartikel veranlasst.

Wie bereits erwähnt, kann vorgesehen sein, dass die Steuerungsvorrichtung die weitere Bearbeitung eines Histologielabor-Verbrauchsartikels, bezüglich dem eine Eingabe erwartet wird, bis zum Eintreffen der Eingabe stoppt und stattdessen die Bearbeitung wenigstens eines anderen Histologielabor-Verbrauchsartikels beginnt oder fortsetzt. Insbesondere kann vorteilhaft vorgesehen sein, dass ein bereits mit einem Aufdruck versehener Histologielabor-Verbrauchsartikel, bezüglich dem einer Eingabe erwartet wird, vorrübergehen aussortiert und in einer Zwischenparkposition überführt wird. Sobald die erforderliche Eingabe erfolgt ist, wird der Histologielabor-Verbrauchsartikel von der Zwischenparkposition zurückgeholt und dann, insbesondere in Abhängigkeit von der erfolgten Eingabe, entweder weiterbearbeitet oder, vorzugsweise zu Gunsten der Wiederholung des Aufdrucks auf einem neuen Histologielabor-Verbrauchsartikel, aussortiert.

Es ist, wie bereits erwähnt, möglich, dass einer der Bearbeitungsschritte beinhaltet, eine Nachricht an einen Benutzer auszugeben. Beispielsweise kann der erfindungsgemäße Drucker derart eingerichtet sein, dass die Steuerungsvorrichtung die Nachricht ausgibt, dass alles in Ordnung ist, wenn die Steuerungsvorrichtung festgestellt hat, dass ein qualitativ hochwertiger Aufdruck aufgebracht wurde. Analog ist es auch möglich, dass eine Warnmeldung ausgeben wird, wenn die Steuerungsvorrichtung erkannt hat, dass kein qualitativ ausreichend guter Aufdruck erfolgt ist.

Bei einer ganz besonders vorteilhaften Ausführung legt die Steuerungsvorrichtung in Abhängigkeit von den Bildsignalen des abgelesenen Aufdrucks und/oder in Abhängigkeit von einem bezüglich des Aufdrucks ermittelten Qualitätsparameter wenigstens einen Druckparameter für die Wiederholung des Aufdruckens des Sollaufdruckbildmusters auf einem anderen Histologielabor-Verbrauchsartikel fest. Bei dieser Ausführung erfolgt der erneute Aufdruck auf einen anderen Histologielabor-Verbrauchsartikel vorteilhaft mit wenigstens einem veränderten Druckparameter, um einen erneuten fehlerhaften Aufdruck zu vermeiden. Die Steuerungsvorrichtung ändert vorzugsweise den Druckparameter (oder mehrere Druckparameter) spezifisch im Hinblick auf den festgestellten Fehler bzw. die festgestellte Art des Fehlers in dem zuvor erfolgten, fehlerhaften Aufdruck. Der Druckparameter kann beispielsweise die Tinte, insbesondere die Art der Tinte, oder den Toner, insbesondere die Art des Toners, oder eine Trocknungstemperatur oder eine Trocknungsdauer oder eine zu verwendende Schriftgröße oder eine zu verwendende Schriftart betreffen. Beispielsweise ist es möglich, dass die Steuerungsvorrichtung für einen erneuten Aufdruck eine andere Tinte aus einem anderen Tintentank des Druckers und/oder eine andere Trocknungsdauer auswählt.

Bei einer besonderen Ausführung speichert die Steuerungsvorrichtung jeweils die empfangenen Aufdruck-Bildsignale in einer Speichervorrichtung ab. Insbesondere kann vorteilhaft vorgesehen sein, dass die Steuerungsvorrichtung die empfangenen Aufdruck-Bildsignale jeweils zusammen mit den Bildsignalen des zugehörigen Sollaufdruckbildmusters abspeichert. Auf diese Weise kann auch zu einem späteren Zeitpunkt, insbesondere maschinell oder durch einen Benutzer, der Aufdruck mit dem Sollaufdruckbildmuster verglichen werden.

Der Drucker kann, wie bereits erwähnt, eine Transportvorrichtung aufweisen, die die Histologielabor-Verbrauchsartikel transportiert.

Hierbei kann insbesondere vorteilhaft vorgesehen sein, dass die optische Lesevorrichtung das Bildmuster jeweils während des Transports zu der Druckeinrichtung von einem zu bedruckenden Histologielabor-Verbrauchsartikel abliest. Dies hat den besonderen Vorteil, dass das Ablesen des Aufdrucks zeitlich parasitär erfolgen kann, so dass der gesamte Prozessablauf innerhalb des Druckers nicht verlangsamt wird.

Bei einer besonders vorteilhaften Ausführung transportiert die Transportvorrichtung den von der Druckeinrichtung bedruckten Histologielabor-Verbrauchsartikel weiter zu einer Entnahmeeinrichtung, aus der der bedruckte Histologielabor-Verbrauchsartikel, insbesondere zusammen mit weiteren bedruckten Histologielabor-Verbrauchsartikeln, entnommen werden kann. Bei dieser Ausführung kann insbesondere vorteilhaft vorgesehen sein, dass die optische Lesevorrichtung den Aufdruck jeweils während des Transports von dem bedruckten Histologielabor-Verbrauchsartikel abliest. Dies hat den besonderen Vorteil, dass das Ablesen des Aufdrucks zeitlich parasitär erfolgen kann, so dass der gesamte Prozessablauf innerhalb des Druckers nicht verlangsamt wird.

Die Druckeinrichtung kann insbesondere dazu ausgebildet sein, einen als Bild oder als Barcode oder als QR-Code oder als Logo oder als Schriftzug ausgebildeten Aufdruck auf den Histologielabor-Verbrauchsartikel aufzubringen.

Wie bereits erwähnt kann vorteilhaft vorgesehen sein, dass die Steuerungsvorrichtung ein Protokoll führt. Insbesondere kann vorteilhaft vorgesehen sein, dass für jeden einzelnen eingelegten Histologielabor-Verbrauchsartikel protokolliert wird, ob ein abgelesener Aufdruck ausgewertet werden konnte und/oder ob ein abgelesener Aufdruck fehlerfrei ist. Das Protokoll kann insbesondere die Bilddaten des abgelesenen Aufdrucks und/oder die Druckparameter bezüglich des vorgenommenen Aufdrucks beinhalten. Darüber hinaus kann das Protokoll Informationen über den Zeitpunkt der Bearbeitung des jeweiligen Histologielabor-Verbrauchsartikels und/oder über einen zugeordneten Patienten und/oder die Chargennummer des verwendeten Druckmediums und/oder die Chargennummer des verwendeten Histologielabor-Verbrauchsartikels beinhalten.

Vorzugsweise legt die Steuerungsvorrichtung die Protokolldaten fortlaufend in einem Speicher ab und/oder gibt die Protokolldaten über eine Schnittstelle aus. Es ist alternativ oder zusätzlich auch möglich, dass die Steuerungsvorrichtung die Protokolldaten auf einer Ausgabevorrichtung, beispielsweise einem Display des Druckers, anzeigt, insbesondere fortlaufend anzeigt.

Bei einer ganz besonders vorteilhaften Ausführung werden die Protokolldaten an einen übergeordneten Computer übertragen und dort gespeichert und/oder weiterverarbeitet.

Insbesondere - und nach einem eigenständigen Erfindungsgedanken - kann vorteilhaft vorgesehen sein, dass der übergeordnete Computer weitere Protokolldaten anderer Drucker und/oder anderer Laborgeräte empfängt und, insbesondere zusammen mit den Protokolldaten des Druckers, abspeichert und/oder weiter verarbeitet. Ganz allgemein und nach dem eigenständigen Erfindungsgedanken ist ein Histologie-Laborsystem von besonderem Vorteil, das einen übergeordneten Computer beinhaltet, der Protokolldaten von einem erfindungsgemäßen Drucker und/oder weitere Protokolldaten von anderen Laborgeräten empfängt, abspeichert und/oder weiterverarbeitet.

Vorzugsweise werden die Protokolldaten und die weiteren Protokolldaten, die dieselbe Probe betreffen, von dem übergeordneten Computer einander zugeordnet und gemeinsam abgespeichert und/oder weiterverarbeitet. Insbesondere ist es so ermöglicht, dass von dem übergeordneten Computer, insbesondere Probenspezifisch, ein übergeordnetes Protokoll erstellt wird, welches die von dem Drucker übermittelten Protokolldaten und die weiteren Protokolldaten anderer Drucker und/oder anderer Laborgeräte beinhaltet. Das übergeordnete Protokoll kann vorzugsweise Daten hinsichtlich sämtlicher Prozessschritte bei der Bearbeitung einer Probe in einem histologischen Labor beinhalten. Insoweit kann das übergeordnete Protokoll insbesondere Protokolldaten und weitere Protokolldaten beinhalten, die die Verarbeitung einer Probe von der Zuschneidestation bis zur Diagnose mittels eines Mikroskops beinhalten. Allerdings ist es auch möglich, dass das übergeordnete Protokoll Protokolldaten und weitere Protokolldaten eines Teilabschnitts eines solchen Bearbeitungsablaufs einer Probe beinhaltet.

Bei einer Variante erfolgt eine Protokollierung ausschließlich nur in den als problematisch erkannten Fällen, insbesondere wenn die Qualität des Aufdrucks nicht ausreichend ist.

Insbesondere kann einer der Bearbeitungsschritte beinhalten, die Bildsignale des abgelesenen Aufdrucks zu speichern und/oder eine durch die Steuerungsvorrichtung ermittelte Information über den Histologielabor-Verbrauchsartikel zu speichern. Dies kann insbesondere in der Weise erfolgen, dass eine Ablage der entsprechenden Daten in dem oben bereits erwähnten Protokoll erfolgt.

Der mittels des erfindungsgemäßen Druckers zu bedruckende Histologielabor-Verbrauchsartikel kann insbesondere eine Kassette, in der wenigstens eine histologische Probe untergebracht ist oder untergebracht werden soll, oder ein Objektträger, auf dem ein Probenschnitt abgelegt ist oder abgelegt werden soll, oder ein Etikett, insbesondere auch ein Klebeetikett, eines Histologielabor-Verbrauchsartikels sein. Vorzugsweise ist der Drucker dazu ausgebildet und bestimmt, Histologielabor-Verbrauchsartikel wenigstens eines der vorgenannten Arten von Histologielabor-Verbrauchsartikel mit einem Aufdruck zu versehen. Insoweit kann der Drucker speziell als Kassettendrucker und/oder als Objektträgerdrucker und/oder als Etikettendrucker ausgebildet sein.

Der erfindungsgemäße Drucker kann insbesondere als Tintenstrahldrucker oder als Laserdrucker ausgebildet sein.

Nach einem eigenständigen Erfindungsgedanken ist ein Drucker von besonderem Vorteil, mit einer Druckeinrichtung zum Bedrucken von Histologielabor-Verbrauchsartikeln, gekennzeichnet durch eine optische Lesevorrichtung, die ein Bildmuster von einem mittels der Druckeinrichtung zu bedruckenden Histologielabor-Verbrauchsartikel abliest, analoge oder digitale Bildmuster-Bildsignale bezüglich des abgelesenen Bildmusters erzeugt und die Bildmuster-Bildsignale an eine Steuerungsvorrichtung (8) des Druckers übergibt, und/oder die ein von der Druckeinrichtung auf einen Histologielabor-Verbrauchsartikel aufgedruckten Aufdruck abliest, analoge oder digitale Aufdruck-Bildsignale bezüglich des abgelesenen Aufdrucks erzeugt und die Aufdruck-Bildsignale an eine Steuerungsvorrichtung des Druckers übergibt. Der Drucker kann eines oder mehrere der oben genannten und/oder in den Ansprüchen erwähnten zusätzlichen Merkmale aufweisen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Druckers,
- Fig. 2: ein zweites Ausführungsbeispiel eines erfindungsgemäßen Druckers,
- Fig. 3: ein Detail eines dritten Ausführungsbeispiels eines erfindungsgemäßen Druckers,
- Fig. 4: ein Detail eines vierten Ausführungsbeispiels eines erfindungsgemäßen Druckers,
- Fig. 5: ein fünftes Ausführungsbeispiel eines erfindungsgemäßen Druckers,
- Fig. 6: ein Detail eines sechsten Ausführungsbeispiels eines erfindungsgemäßen Druckers,
- Fig. 7: ein Detail eines siebenten Ausführungsbeispiels eines erfindungsgemäßen Druckers,
- Fig. 8: ein achtes Ausführungsbeispiel eines erfindungsgemäßen Druckers.

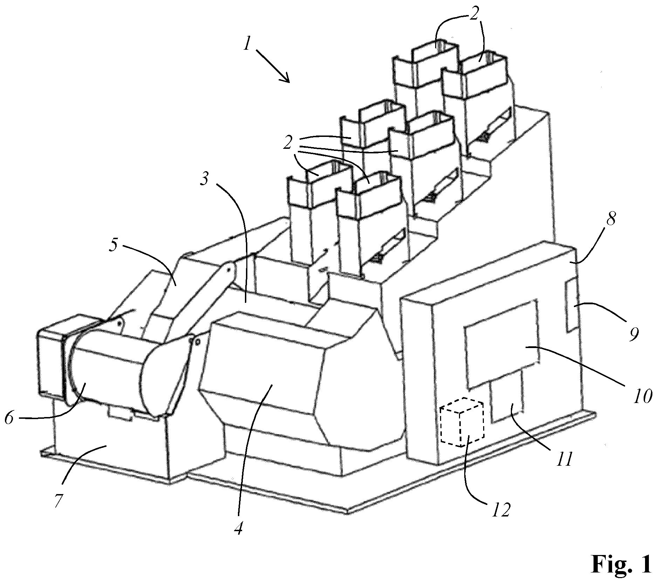

Figur 1 zeigt ein erstes Ausführungsbeispiel eines erfindungsgemäßen Druckers, der eine Materialzuführung 1 aufweist. Die Materialzuführung 1 beinhaltet mehrere Stapelmagazine 2 für (in dieser Figur nicht sichtbare) zu bedruckende Histologielabor-Verbrauchsartikel 16, wie beispielsweise Kassetten 17 oder Objektträger 19 oder Etiketten. Der Materialzuführung 1 ist eine Transportvorrichtung 3 zugeordnet, die jeweils nacheinander einen Histologielabor-Verbrauchsartikel 16 von der Materialzuführung 1 zu einer Druckeinrichtung 4 transportiert. Die Druckeinrichtung 4 kann beispielsweise einen Tintenstrahldrucker beinhalten. Die bedruckten Histologielabor-Verbrauchsartikel 16 werden von der Transportvorrichtung 3 zu einer Warmlufttrocknungsvorrichtung 5 geleitet und dort vorgetrocknet. Danach werden die Histologielabor-Verbrauchsartikel 16 an eine Blitzeinrichtung 6 geleitet, die für eine Durchtrocknung der Tinte durch Wärmezufuhr mit Infrarotstrahlung und/oder UV-Strahlung sorgt. Die so bearbeiteten Histologielabor-Verbrauchsartikel 16 werden anschließend zu einer Entnahmeeinrichtung 7 weitergeleitet.

Der Drucker weist eine (in der Figur 1 nicht sichtbare) optische Lesevorrichtung 13 auf, die einen von der Druckeinrichtung 4 auf einen Histologielabor-Verbrauchsartikel 16 aufgedruckten Aufdruck 18 abliest und analoge oder digitale Aufdruck-Bildsignale bezüglich des abgelesenen Aufdrucks 18 erzeugt. Die Aufdruck-Bildsignale werden an eine Steuerungsvorrichtung 8 des Druckers übergeben.

Die Steuerungsvorrichtung 8 weist eine Schnittstelle 9 zum Anschließen des Druckers an ein Computernetzwerk oder zum unmittelbaren Anschließen an einen Computer auf.

Die Steuerungsvorrichtung 8 weist darüber hinaus ein Display 10 auf, mittels dem Nachrichten an einen Benutzer ausgegeben werden können. Insbesondere kann das Display 10 auch dazu dienen, Eingaben von einem Benutzer anzufordern, die der Benutzer über eine Eingabevorrichtung 11, die beispielsweise ein Tastenfeld sein kann, eingeben kann. Das Display 10 kann beispielsweise auch dazu dienen, fortlaufend Informationen über die mittels der optischen Lesevorrichtung abgelesenen Aufdrucke 18 und/oder die Auswerteergebnisse hinsichtlich der abgelesenen Aufdrucke 18 anzuzeigen.

Die Steuerungsvorrichtung 8 beinhaltet eine Speichervorrichtung 12, in der die Steuerungsvorrichtung jeweils die empfangenen Aufdruck-Bildsignale jeweils zusammen mit den Bildsignalen des zugehörigen Sollaufdruckbildmusters abspeichert. Insbesondere kann in der Speichervorrichtung 12 vorteilhaft ein Protokoll abgelegt werden, das über die Schnittstelle 9 an einen angeschlossenen Computer weitergeleitet werden kann und/oder das auf dem Display 10 dargestellt werden kann.

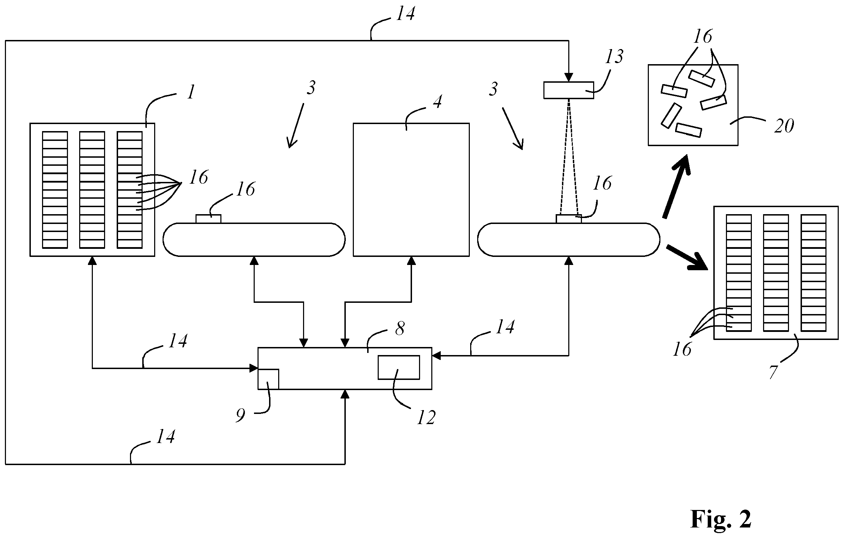

Figur 2 zeigt schematisch ein zweites Ausführungsbeispiel eines erfindungsgemäßen Druckers.

Der Drucker weist eine Materialzuführung 1 auf, in der zu bedruckende Histologielabor-Verbrauchsartikel 16, wie beispielsweise Kassetten 17 oder Objektträger 19 bevorratet werden können.

Der Drucker weist außerdem eine Transportvorrichtung 3 auf, die jeweils nacheinander einen Histologielabor-Verbrauchsartikel 16 von der Materialzuführung 1 zu einer Druckeinrichtung 4 transportiert. Außerdem transportiert die Transportvorrichtung 3 die von der Druckeinrichtung 4 bedruckten Histologielabor-Verbrauchsartikel 16 zu einer Entnahmeeinrichtung 7 weiter, aus der die bedruckten Histologielabor-Verbrauchsartikel 16 dann entnommen werden können.

Der Drucker weist außerdem eine optische Lesevorrichtung 13 auf, die ein von der Druckeinrichtung 4 auf einen Histologielabor-Verbrauchsartikel 16 aufgedruckten Aufdruck 18 abliest, während dieser von der Druckeinrichtung 4 weg transportiert wird. Die optische Lesevorrichtung 13 erzeugt analoge oder digitale Aufdruck-Bildsignale bezüglich des abgelesenen Aufdrucks 18 und übergibt die Aufdruck-Bildsignale an die Steuerungsvorrichtung 8. Die Steuerungsvorrichtung 8 weist eine Schnittstelle 9 zum Anschließen des Druckers an ein Computernetzwerk oder zum unmittelbaren Anschließen an einen Computer auf.

Die Steuerungsvorrichtung 8 ist mittels Datenkabeln 14 mit der Materialzuführung 1, der Transportvorrichtung 3 und der Druckeinrichtung 4 verbunden, um Daten zu empfangen und/oder Steuerbefehle auszugeben.

Die Steuerungsvorrichtung 8 wertet die von der optischen Lesevorrichtung 13 empfangenen Aufdruck-Bildsignale aus. Dies erfolgt durch Vergleichen der empfangenen Aufdruck-Bildsignale mit den analogen oder digitalen Bildsignalen des zugehörigen Sollaufdruckbildmusters. Der Drucker empfängt die analogen oder digitalen Bildsignale des Sollaufdruckbildmusters, das in Klarschrift oder in codierter Form insbesondere Patientendaten beinhalten kann, von einem übergeordneten (in dieser Figur nicht dargestellten) Computer, an den der Drucker mittels der Schnittstelle 9 angeschlossen ist. Insbesondere kann vorteilhaft vorgesehen sein, dass die Steuerungsvorrichtung 8 die Druckeinrichtung 4 entsprechend steuert, um jeweils einen zu dem Sollaufdruckbildmuster möglichst gleichen Aufdruck 18 auf den Histologielabor-Verbrauchsartikel aufzudrucken.

Wenn die Auswertung ergibt, dass der auf den jeweiligen Histologielabor-Verbrauchsartikel 16 aufgebrachte Aufdruck 18 fehlerfrei ist, steuert die Steuerungsvorrichtung 8 die Transportvorrichtung 3 derart, dass der Histologielabor-Verbrauchsartikel 16 zu der Entnahmeeinrichtung 7 transportiert wird.

Wenn die Auswertung ergibt, dass der auf den jeweiligen Histologielabor-Verbrauchsartikel 16 aufgebrachte Aufdruck 18 nicht fehlerfrei ist, wird der Histologielabor-Verbrauchsartikel 16 aussortiert. In diesem Fall steuert die Steuerungsvorrichtung 8 die Transportvorrichtung 3 derart, dass der Histologielabor-Verbrauchsartikel 16 zu einer weiteren Entnahmeeinrichtung 20 transportiert wird, aus der der Benutzer den fehlbedruckten Histologielabor-Verbrauchsartikel 16, insbesondere für eine nachfolgende Entsorgung, entnehmen kann.

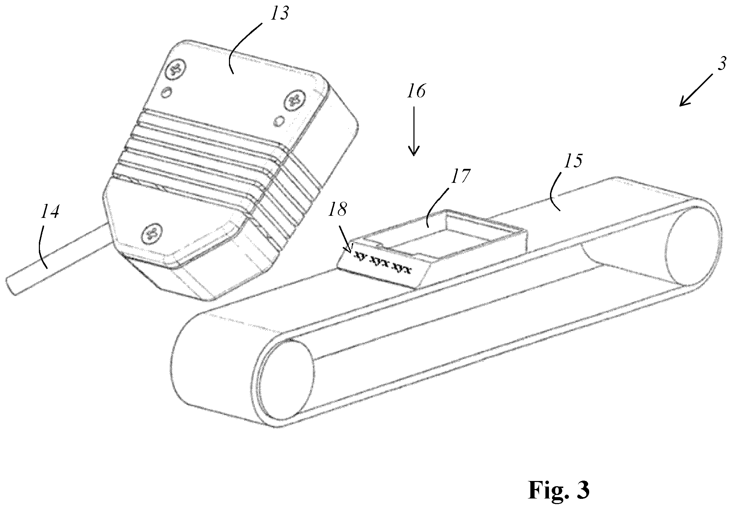

Figur 3 zeigt ein Detail eines dritten Ausführungsbeispiels eines erfindungsgemäßen Druckers, der eine Transporteinrichtung 3 aufweist. Die Transporteinrichtung 3 transportiert die Histologielabor-Verbrauchsartikel 16 weiter, die in einer (in dieser Figur nicht dargestellten) Druckeinrichtung 4 mit einem Aufdruck versehen wurden. Die Transporteinrichtung 3 weist ein Transportband 15 auf, auf dem die Histologielabor-Verbrauchsartikel 16, nämlich Kassetten 17, transportiert werden.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 liest den Aufdruck 18 von jedem vorbeikommenden Histologielabor-Verbrauchsartikel 16 ab und leitet über das Datenkabel 14 analoge oder digitale Aufdruck-Bildsignale bezüglich des abgelesenen Aufdrucks 18 an die Steuerungsvorrichtung 8 weiter.

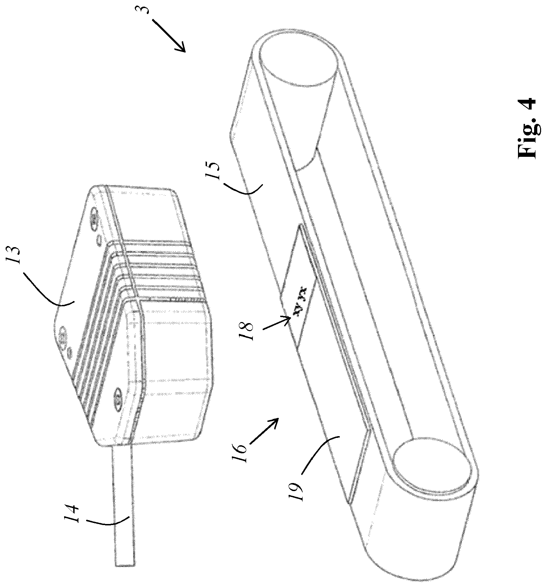

Figur 4 zeigt ein Detail eines vierten Ausführungsbeispiels eines erfindungsgemäßen Druckers, der eine Transporteinrichtung 3 aufweist. Die Transporteinrichtung 3 transportiert die Histologielabor-Verbrauchsartikel 16 weiter, die in einer (in dieser Figur nicht dargestellten) Druckeinrichtung 4 mit einem Aufdruck 18 versehen wurden. Die Transporteinrichtung 3 weist ein Transportband 15 auf, auf dem die Histologielabor-Verbrauchsartikel 16, nämlich Objektträger 19, transportiert werden.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 liest den Aufdruck 18 von jedem vorbeikommenden Histologielabor-Verbrauchsartikel 16 ab und leitet über das Datenkabel 14 analoge oder digitale Aufdruck-Bildsignale bezüglich des abgelesenen Aufdrucks 18 an die Steuerungsvorrichtung 8 weiter.

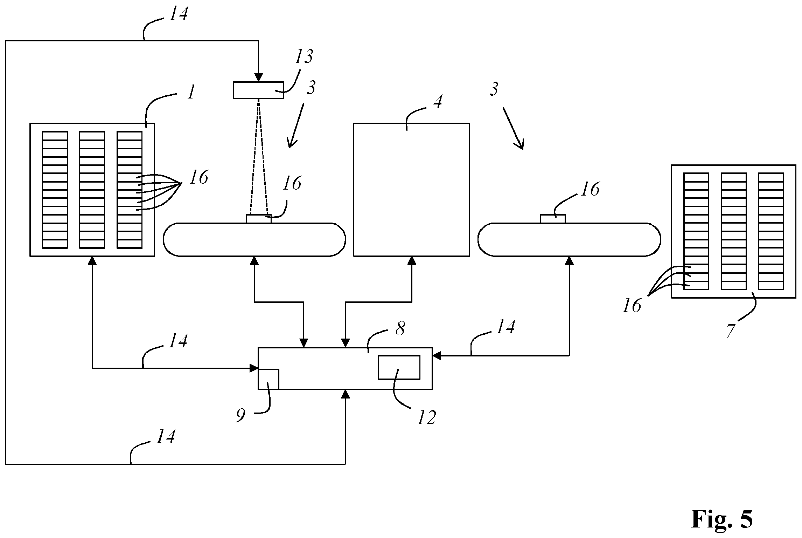

Figur 5 zeigt schematisch ein fünftes Ausführungsbeispiel eines erfindungsgemäßen Druckers.

Der Drucker weist eine Materialzuführung 1 auf, in der zu bedruckende Histologielabor-Verbrauchsartikel 16, wie beispielsweise Kassetten 17 oder Objektträger 19 bevorratet werden können.

Der Drucker weist außerdem eine Transportvorrichtung 3 auf, die jeweils nacheinander einen Histologielabor-Verbrauchsartikel 16 von der Materialzuführung 1 zu einer Druckeinrichtung 4 transportiert. Außerdem transportiert die Transportvorrichtung 3 die von der Druckeinrichtung 4 bedruckten Histologielabor-Verbrauchsartikel 16 zu einer Entnahmeeinrichtung 7 weiter, aus der die bedruckten Histologielabor-Verbrauchsartikel 16 dann entnommen werden können.

Der Drucker weist außerdem eine optische Lesevorrichtung 13 auf, die ein Bildmuster 21 von einem zu bedruckenden Histologielabor-Verbrauchsartikel 16 abliest, analoge oder digitale Bildmuster-Bildsignale bezüglich des abgelesenen Bildmusters 21 erzeugt und die Bildmuster-Bildsignale an eine Steuerungsvorrichtung 8 des Druckers übergibt.

Die Steuerungsvorrichtung 8 weist eine Schnittstelle 9 zum Anschließen des Druckers an ein Computernetzwerk, einen übergeordneten Computer oder zum unmittelbaren Anschließen an einen Computer auf.

Die Steuerungsvorrichtung 8 ist mittels Datenkabeln 14 mit der Materialzuführung 1, der Transportvorrichtung 3 und der Druckeinrichtung 4 verbunden, um Daten zu empfangen und/oder Steuerbefehle auszugeben.

Die Steuerungsvorrichtung 8 wertet die von der optischen Lesevorrichtung 13 empfangenen Bildmuster-Bildsignale aus legt in Abhängigkeit von dem Auswerteergebnisses wenigstens einen Bearbeitungsschritt für die weitere Bearbeitung des Histologielabor-Verbrauchsartikels 16 fest. Die Steuerungsvorrichtung 8 vergleicht bei dem Auswerten die von der optischen Lesevorrichtung 13 empfangenen Bildmuster-Bildsignale mit den Bildsignalen wenigstens eines Referenzbildmusters.

Wenn die Steuerungsvorrichtung 8 den zu bedruckenden Histologielabor-Verbrauchsartikel 16 erkannt hat und festgestellt hat, dass ein qualitativ hochwertiger Aufdruck möglich ist, gibt die Steuerungsvorrichtung 8 die Nachricht aus, dass alles in Ordnung ist. Gleichzeitig legt die Steuerungsvorrichtung 8 als weiteren Bearbeitungsschritt fest, dass ein ordnungsgemäßer Aufdruck erfolgen soll.

Wenn die Auswertung ergibt, dass ein qualitativ ausreichend guter Aufdruck nicht möglich ist oder wenn die Steuerungsvorrichtung 8 dem erfassten Bildmuster 21 bei der Auswertung keinen Hersteller und/oder keine Produktserie zuordnen konnte, wird eine Warnmeldung ausgeben. Insbesondere kann in diesem Fall vorgesehen sein, dass ein Aufdrucken erst nach einer Bestätigung durch das Laborpersonal, dass ein Bedrucken dennoch gewünscht ist, erfolgt.

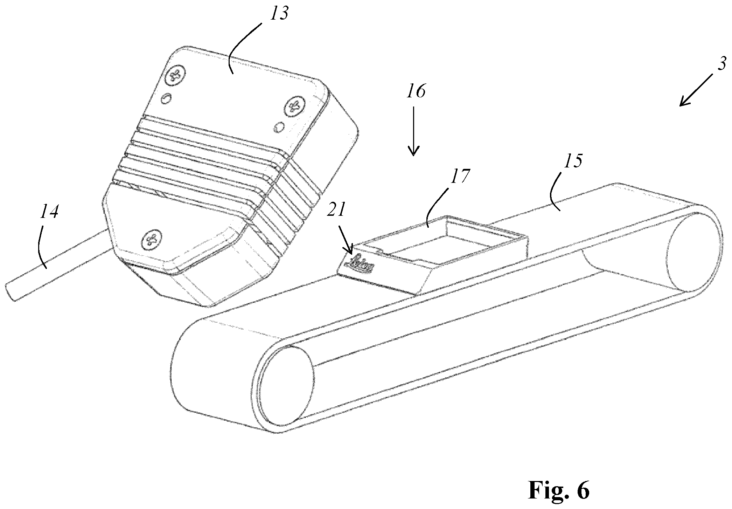

Figur 6 zeigt ein Detail eines sechsten Ausführungsbeispiels eines erfindungsgemäßen Druckers, der eine Transporteinrichtung 3 zum Weitertransportieren von Histologielabor-Verbrauchsartikeln 16 aufweist, die von einer (in dieser Figur nicht dargestellten) Materialzuführung 1 kommen.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 leitet über das Datenkabel 14 analoge oder digitale Bildmuster-Bildsignale bezüglich des jeweils abgelesenen Bildmusters 21 weiter an die Steuerungsvorrichtung 8.

Die Transporteinrichtung 3 weist ein Transportband 15 auf, auf dem Histologielabor-Verbrauchsartikel 16, nämlich Kassetten 17 transportiert werden. Die optische Lesevorrichtung 13 liest ein Bildmuster 21 von jedem vorbeikommenden Histologielabor-Verbrauchsartikel 16 ab und leitet Bildsignale bezüglich des abgelesenen Bildmusters 21 an die (in dieser Figur nicht dargestellte) Steuerungsvorrichtung 8 weiter.

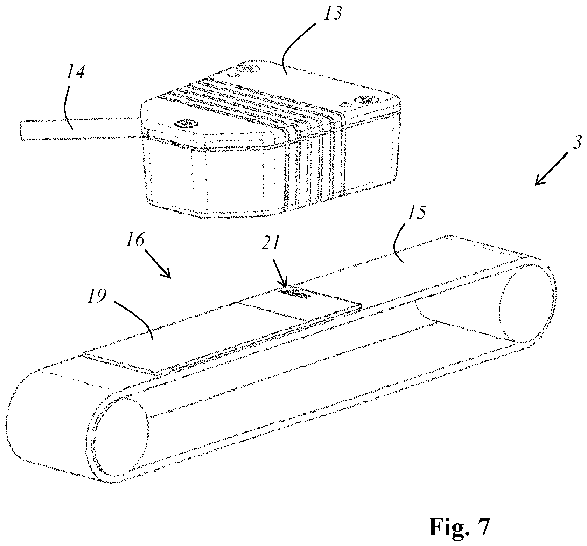

Figur 7 zeigt ein Detail eines siebenten Ausführungsbeispiels eines erfindungsgemäßen Druckers, der eine Transporteinrichtung 3 zum Weitertransportieren von Histologielabor-Verbrauchsartikeln 16 aufweist, die von einer (in dieser Figur nicht dargestellten) Materialzuführung 1 kommen.

Der Drucker beinhaltet eine optische Lesevorrichtung 13, die beispielsweise als digitale Kamera ausgebildet sein kann. Die optische Lesevorrichtung 13 ist über ein Datenkabel 14 an eine (in dieser Figur nicht dargestellte) Steuerungsvorrichtung 8 angeschlossen. Die optische Lesevorrichtung 13 leitet über das Datenkabel 14 analoge oder digitale Bildmuster-Bildsignale bezüglich des jeweils abgelesenen Bildmusters 21 weiter an die Steuerungsvorrichtung 8.

Die Transporteinrichtung 3 weist ein Transportband 15 auf, auf dem Histologielabor-Verbrauchsartikel 16, nämlich Objektträger 19 transportiert werden. Die optische Lesevorrichtung 13 liest ein Bildmuster 21 von jedem vorbeikommenden Histologielabor-Verbrauchsartikel 16 ab und leitet Bildsignale bezüglich des abgelesenen Bildmusters 21 an die (in dieser Figur nicht dargestellte) Steuerungsvorrichtung 8 weiter.

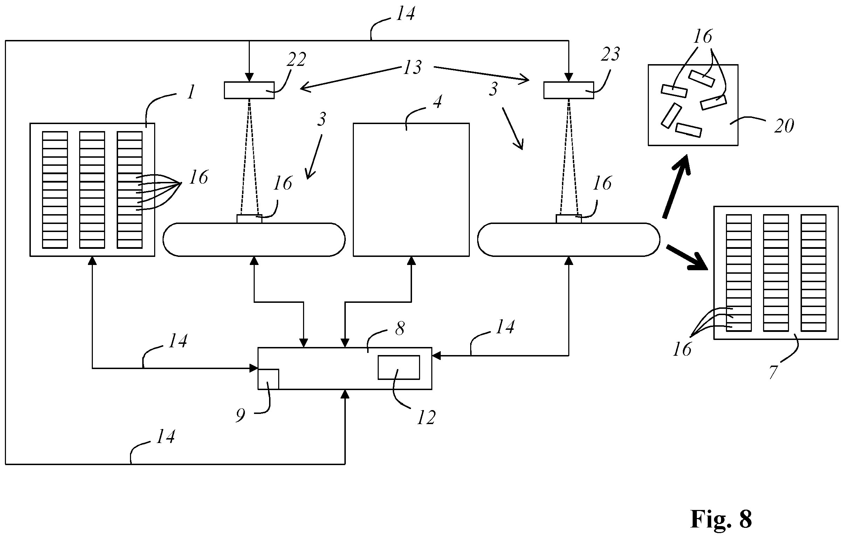

Figur 8 zeigt schematisch ein achtes Ausführungsbeispiel eines erfindungsgemäßen Druckers.

Der Drucker weist eine Materialzuführung 1 auf, in der zu bedruckende Histologielabor-Verbrauchsartikel 16, wie beispielsweise Kassetten 17 oder Objektträger 19 bevorratet werden können.

Der Drucker weist außerdem eine Transportvorrichtung 3 auf, die jeweils nacheinander einen Histologielabor-Verbrauchsartikel 16 von der Materialzuführung 1 zu einer Druckeinrichtung 4 transportiert. Außerdem transportiert die Transportvorrichtung 3 die von der Druckeinrichtung 4 bedruckten Histologielabor-Verbrauchsartikel 16 zu einer Entnahmeeinrichtung 7 weiter, aus der die bedruckten Histologielabor-Verbrauchsartikel 16 dann entnommen werden können.

Der Drucker weist außerdem eine optische Lesevorrichtung 13 auf, die eine erste Kamera 22 und eine zweite Kamera 23 beinhaltet.

Die erste Kamera 22 liest ein Bildmuster 21 von einem zu bedruckenden Histologielabor-Verbrauchsartikel 16 ab, erzeugt analoge oder digitale Bildmuster-Bildsignale bezüglich des abgelesenen Bildmusters 21 und übergibt die Bildmuster-Bildsignale an eine Steuerungsvorrichtung 8 des Druckers.

Die Steuerungsvorrichtung 8 wertet die von der ersten Kamera 22 empfangenen Bildmuster-Bildsignale aus legt in Abhängigkeit von dem Auswerteergebnisses wenigstens einen Bearbeitungsschritt für die weitere Bearbeitung des Histologielabor-Verbrauchsartikels 16 fest. Die Steuerungsvorrichtung 8 vergleicht bei dem Auswerten die von der optischen Lesevorrichtung 13 empfangenen Bildmuster-Bildsignale mit den Bildsignalen wenigstens eines Referenzbildmusters.

Wenn die Steuerungsvorrichtung 8 den zu bedruckenden Histologielabor-Verbrauchsartikel 16 erkannt hat und festgestellt hat, dass ein qualitativ hochwertiger Aufdruck möglich ist, gibt die Steuerungsvorrichtung 8 die Nachricht aus, dass alles in Ordnung ist. Gleichzeitig legt die Steuerungsvorrichtung 8 als weiteren Bearbeitungsschritt fest, dass ein ordnungsgemäßer Aufdruck erfolgen soll.

Wenn die Auswertung ergibt, dass ein qualitativ ausreichend guter Aufdruck nicht möglich ist oder wenn die Steuerungsvorrichtung 8 dem erfassten Bildmuster 21 bei der Auswertung keinen Hersteller und/oder keine Produktserie zuordnen konnte, wird eine Warnmeldung ausgeben. Insbesondere kann in diesem Fall vorgesehen sein, dass ein Aufdrucken erst nach einer Bestätigung durch das Laborpersonal, dass ein Bedrucken dennoch gewünscht ist, erfolgt.

Die zweite Kamera 23 liest jeweils ein von der Druckeinrichtung 4 auf einen Histologielabor-Verbrauchsartikel 16 aufgedruckten Aufdruck 18 ab, während der Histologielabor-Verbrauchsartikel 16 von der Druckeinrichtung 4 weg transportiert wird. Die zweite Kamera 23 erzeugt analoge oder digitale Aufdruck-Bildsignale bezüglich des abgelesenen Aufdrucks 18 und übergibt die Aufdruck-Bildsignale an die Steuerungsvorrichtung 8.

Die Steuerungsvorrichtung 8 wertet die von der optischen Lesevorrichtung 13 empfangenen Aufdruck-Bildsignale aus. Dies erfolgt durch Vergleichen der empfangenen Aufdruck-Bildsignale mit den analogen oder digitalen Bildsignalen des zugehörigen Sollaufdruckbildmusters. Der Drucker empfängt die analogen oder digitalen Bildsignale des Sollaufdruckbildmusters, das in Klarschrift oder in codierter Form insbesondere Patientendaten beinhalten kann, von einem übergeordneten (in dieser Figur nicht dargestellten) Computer, an den der Drucker mittels der Schnittstelle 9 angeschlossen ist.

Wenn die Auswertung ergibt, dass der auf den jeweiligen Histologielabor-Verbrauchsartikel 16 aufgebrachte Aufdruck 18 fehlerfrei ist, steuert die Steuerungsvorrichtung 8 die Transportvorrichtung 3 derart, dass der Histologielabor-Verbrauchsartikel 16 zu der Entnahmeeinrichtung 7 transportiert wird.

Wenn die Auswertung ergibt, dass der auf den jeweiligen Histologielabor-Verbrauchsartikel 16 aufgebrachte Aufdruck 18 nicht fehlerfrei ist, wird der Histologielabor-Verbrauchsartikel 16 aussortiert. In diesem Fall steuert die Steuerungsvorrichtung 8 die Transportvorrichtung 3 derart, dass der Histologielabor-Verbrauchsartikel 16 zu einer weiteren Entnahmeeinrichtung 20 transportiert wird, aus der der Benutzer den fehlbedruckten Histologielabor-Verbrauchsartikel 16, insbesondere für eine nachfolgende Entsorgung, entnehmen kann.

Die Steuerungsvorrichtung 8 weist eine Schnittstelle 9 zum Anschließen des Druckers an ein Computernetzwerk oder zum unmittelbaren Anschließen an einen Computer auf.

Die Steuerungsvorrichtung 8 ist mittels Datenkabeln 14 mit der optischen Lesevorrichtung 13, der Materialzuführung 1, der Transportvorrichtung 3 und der Druckeinrichtung 4 verbunden, um Daten zu empfangen und/oder Steuerbefehle auszugeben.

### Bezugszeichenliste:

- 1: Materialzuführung
- 2: Stapelmagazin
- 3: Transportvorrichtung
- 4: Druckeinrichtung
- 5: Warmlufttrocknungsvorrichtung
- 6: Blitzeinrichtung
- 7: Entnahmeeinrichtung
- 8: Steuerungsvorrichtung
- 9: Schnittstelle
- 10: Display
- 11: Eingabevorrichtung
- 12: Speichervorrichtung
- 13: optische Lesevorrichtung
- 14: Datenkabel
- 15: Transportband
- 16: Histologielabor-Verbrauchsartikel
- 17: Kassette
- 18: Aufdruck
- 19: Objektträger
- 20: Weitere Entnahmeeinrichtung
- 21: Bildmuster

## Patentansprüche

1. Drucker mit einer Druckeinrichtung (4) zum Bedrucken von Histologielabor-Verbrauchsartikeln (16), insbesondere von Kassetten (17) oder Objektträgern (19) oder Etiketten, mit einer optischen Lesevorrichtung (13),
**dadurch gekennzeichnet, dass** die optische Lesevorrichtung
a. ein Bildmuster von einem mittels der Druckeinrichtung (4) zu bedruckenden Histologielabor-Verbrauchsartikel (16) abliest, analoge oder digitale Bildmuster-Bildsignale bezüglich des abgelesenen Bildmusters (18) erzeugt und die Bildmuster-Bildsignale an eine Steuerungsvorrichtung (8) des Druckers übergibt, und/oder die
b. ein von der Druckeinrichtung (4) auf einen Histologielabor-Verbrauchsartikel (16) aufgedruckten Aufdruck (18) abliest, analoge oder digitale Aufdruck-Bildsignale bezüglich des abgelesenen Aufdrucks (18) erzeugt und die Aufdruck-Bildsignale an eine Steuerungsvorrichtung (8) des Druckers übergibt, die wenigstens einen Qualitätsparameter bezüglich des Aufdrucks (18) ermittelt.

2. Drucker nach Anspruch 1, **dadurch gekennzeichnet, dass** die Steuerungsvorrichtung (8) die empfangenen Bildmuster-Bildsignale und/oder Aufdruck-Bildsignale auswertet und in Abhängigkeit von dem Auswerteergebnis wenigstens einen Bearbeitungsschritt für die weitere Bearbeitung des Histologielabor-Verbrauchsartikels (16) innerhalb des Druckers festlegt.

3. Drucker nach Anspruch 2, **dadurch gekennzeichnet, dass**
a. die Steuerungsvorrichtung (8) zum Auswerten der empfangenen Aufdruck-Bildsignale die von der optischen Lesevorrichtung (13) empfangenen Aufdruck-Bildsignale mit den analogen oder digitalen Bildsignalen eines Sollaufdruckbildmusters, insbesondere durch Bildanalyse und/oder durch Mustererkennung, vergleicht, und/oder dass
b. die Steuerungsvorrichtung (8) zum Auswerten der empfangenen Bildmuster-Bildsignale die von der optischen Lesevorrichtung (13) empfangenen Bildsignale mit den Bildsignalen wenigstens eines Referenzbildmusters, insbesondere durch Bildanalyse und/oder durch Mustererkennung, vergleicht.

4. Drucker nach einem der Ansprüche 1 bis 3, **dadurch gekennzeichnet, dass**
a. der Qualitätsparameter die Schärfe des Aufdrucks (18) betrifft und/oder dass
b. der Qualitätsparameter den Kontrast des Aufdrucks (18) betrifft und/oder dass
c. der Qualitätsparameter die Druckauflösung des Aufdrucks (18) betrifft und/oder dass
d. der Qualitätsparameter die Exaktheit der Farbe des Aufdrucks (18) betrifft und/oder dass
e. der Qualitätsparameter die Konstanz der Farbe des Aufdrucks (18) betrifft und/oder dass
f. der Qualitätsparameter den Farbverlauf des Aufdrucks (18) betrifft und/oder dass
g. der Qualitätsparameter die Lage des Aufdrucks (18) auf dem Histologielabor-Verbrauchsartikel (16) betrifft und/oder dass
h. der Qualitätsparameter das Vorhandensein des Aufdrucks (18) auf dem Histologielabor-Verbrauchsartikel (16) betrifft.

5. Drucker nach einem der Ansprüche 2 bis 4, **dadurch gekennzeichnet, dass**
a. einer der Bearbeitungsschritte beinhaltet, eine Eingabe von einem Benutzer anzufordern, oder dass
b. einer der Bearbeitungsschritte beinhaltet, eine Eingabe von einem Benutzer anzufordern, und dass die Steuerungsvorrichtung (8) die Eingabe auswertet und in Abhängigkeit von der Eingabe einen bereits festgelegten Bearbeitungsschritt löscht und/oder wenigstens einen weiteren Bearbeitungsschritt für die weitere Bearbeitung des Histologielabor-Verbrauchsartikels (16) festlegt, oder dass
c. einer der Bearbeitungsschritte beinhaltet, eine Eingabe von einem Benutzer anzufordern, und dass die Steuerungsvorrichtung (8) die Bearbeitung eines Histologielabor-Verbrauchsartikels (16), bezüglich dem eine Eingabe erwartet wird, bis zum Eintreffen der Eingabe stoppt und stattdessen die Bearbeitung wenigstens eines anderen Histologielabor-Verbrauchsartikels (16) beginnt oder fortsetzt, oder dass
d. einer der Bearbeitungsschritte beinhaltet, eine Nachricht an einen Benutzer auszugeben, oder dass
e. einer der Bearbeitungsschritte beinhaltet, den Histologielabor-Verbrauchsartikel (16) zu bedrucken.

6. Drucker nach einem der Ansprüche 1 bis 5, **dadurch gekennzeichnet, dass**
a. die Steuerungsvorrichtung (8) aufgrund der Bildmuster-Bildsignale ermittelt, wo sich ein Druckfeld auf dem Histologielabor-Verbrauchsartikel (16) befindet, und/oder dass
b. die Steuerungsvorrichtung (8) in Abhängigkeit von den Bildmuster-Bildsignalen des abgelesenen Bildmusters (18) wenigstens einen einzustellenden Druckparameter festlegt.

7. Drucker nach einem der Ansprüche 2 bis 6, **dadurch gekennzeichnet, dass**
a. einer der Bearbeitungsschritte beinhaltet, den Histologielabor-Verbrauchsartikel (16) auszuwerfen ohne ihn zu bedrucken, und/oder dass
b. einer der Bearbeitungsschritte beinhaltet, das Ausdrucken des Sollaufdruckbildmusters auf einem anderen Histologielabor-Verbrauchsartikel (16) zu wiederholen, und/oder dass
c. einer der Bearbeitungsschritte beinhaltet, das Ausdrucken des Sollaufdruckbildmusters auf einem anderen Histologielabor-Verbrauchsartikel (16) zu wiederholen, wobei die Steuerungsvorrichtung (8) in Abhängigkeit von den Bildsignalen des abgelesenen Aufdrucks (18) und/oder in Abhängigkeit von einem bezüglich des Aufdrucks (18) ermittelten Qualitätsparameter wenigstens einen Druckparameter für die Wiederholung des Aufdruckens des Sollaufdruckbildmusters auf einem anderen Histologielabor-Verbrauchsartikel (16) festlegt.

8. Drucker nach einem der Ansprüche 1 bis 7, **dadurch gekennzeichnet, dass**
a. die Steuerungsvorrichtung (8) jeweils die empfangenen Bildmuster-Bildsignale in einer Speichervorrichtung (12) abspeichert, und/oder dass
b. einer der Bearbeitungsschritte beinhaltet, die Bildsignale des abgelesenen Bildmusters (18) zu speichern und/oder eine durch die Steuerungsvorrichtung (8) ermittelte Information über den Histologielabor-Verbrauchsartikel (16) zu speichern, und/oder dass
c. die Steuerungsvorrichtung (8) jeweils die empfangenen Aufdruck-Bildsignale in einer Speichervorrichtung (12) abspeichert oder dass die Steuerungsvorrichtung (8) die empfangenen Aufdruck-Bildsignale jeweils zusammen mit den Bildsignalen des zugehörigen Sollaufdruckbildmusters abspeichert.

9. Drucker nach einem der Ansprüche 1 bis 8, **dadurch gekennzeichnet, dass** die optische Lesevorrichtung (13) dazu ausgebildet und angeordnet ist, ein als Barcode oder als QR-Code oder als Logo oder als Schriftzug ausgebildetes Bildmuster (18) abzulesen.

10. Drucker nach einem der Ansprüche 1 bis 9, **dadurch gekennzeichnet, dass**
a. der Drucker eine Transportvorrichtung (3) aufweist, die die Histologielabor-Verbrauchsartikel (16) transportiert, oder dass
b. der Drucker eine Transportvorrichtung (3) aufweist, die die Histologielabor-Verbrauchsartikel (16) transportiert, und der Drucker eine Aufnahme für eine Vielzahl von zu bedruckenden Histologielabor-Verbrauchsartikel (16) aufweist, aus der die Transportvorrichtung (3) die zu bedruckenden Histologielabor-Verbrauchsartikel (16) einzeln entnimmt und zu der Druckeinrichtung (4) weiter transportiert, oder dass
c. der Drucker eine Transportvorrichtung (3) aufweist, die die Histologielabor-Verbrauchsartikel (16) transportiert, und der Drucker eine Aufnahme für eine Vielzahl von zu bedruckenden Histologielabor-Verbrauchsartikel (16) aufweist, aus der die Transportvorrichtung (3) die zu bedruckenden Histologielabor-Verbrauchsartikel (16) einzeln entnimmt und zu der Druckeinrichtung (4) weiter transportiert, wobei die Transportvorrichtung (3) die von der Druckeinrichtung (4) bedruckten Histologielabor-Verbrauchsartikel (16), insbesondere zu einer Entnahmeeinrichtung (7), weiter transportiert.

11. Drucker nach Anspruch 9 und 10, **dadurch gekennzeichnet, dass**
a. die optische Lesevorrichtung (13) das Bildmuster (18) jeweils während des Transports zu der Druckeinrichtung (4) von einem zu bedruckenden Histologielabor-Verbrauchsartikel (16) abliest, und/oder dass
b. die optische Lesevorrichtung (13) den Aufdruck (18) jeweils während des Transports von dem bedruckten Histologielabor-Verbrauchsartikel (16) abliest.

12. Drucker nach einem der Ansprüche 1 bis 11, **dadurch gekennzeichnet, dass**
a. die Druckeinrichtung (4) dazu ausgebildet ist, einen als Bild oder als Barcode oder als QR-Code oder als Logo oder als Schriftzug ausgebildeten Aufdruck (18) auf den Histologielabor-Verbrauchsartikel aufzubringen, und/oder dass
b. die optische Lesevorrichtung (13) dazu ausgebildet und angeordnet ist, einen als Bild oder als Barcode oder als QR-Code oder als Logo oder als Schriftzug ausgebildeten Aufdruck (18) abzulesen.

13. Drucker nach einem der Ansprüche 1 bis 12, **dadurch gekennzeichnet, dass**
a. die Steuerungsvorrichtung (8) fortlaufend ein Protokoll führt, oder dass
b. die Steuerungsvorrichtung (8) fortlaufend ein Protokoll führt und, insbesondere fortlaufend, Protokolldaten in einem Speicher ablegt und/oder über eine Schnittstelle ausgibt und/oder auf einer Ausgabevorrichtung anzeigt.

14. Drucker nach einem der Ansprüche 1 bis 13, **dadurch gekennzeichnet, dass**
a. der Drucker als Tintenstrahldrucker oder als Laserdrucker ausgebildet ist, und/oder dass
b. der Drucker als Kassettendrucker und/oder als Objektträgerdrucker und/oder als Etikettendrucker ausgebildet ist.

15. Histologie-Laborsystem, das einen Drucker nach einem der Ansprüche 1 bis 14 sowie einen übergeordneten Computer aufweist, der
a. Protokolldaten von dem Drucker empfängt, oder der
b. Protokolldaten von dem Drucker und weitere Protokolldaten anderer Drucker und/oder anderer Laborgeräte empfängt, oder der
c. Protokolldaten von dem Drucker und weitere Protokolldaten anderer Drucker und/oder anderer Laborgeräte empfängt und jeweils die Protokolldaten und die weiteren Protokolldaten, die dieselbe Probe betreffen, einander zugeordnet und gemeinsam abspeichert und/oder weiterverarbeitet.

## Claims

1. Printer having a printing device (4) for printing on histology-laboratory consumable articles (16), in particular on cassettes (17) or slides (19) or labels, having an optical reading apparatus (13),
**characterized in that** the optical reading apparatus
a. reads an image pattern of a histology-laboratory consumable article (16) to be printed on by means of the printing device (4), generates analogue or digital image-pattern image signals relating to the image pattern (18) that has been read, and transfers the image-pattern image signals to a control apparatus (8) of the printer, and/or
b. reads an impression (18) printed on a histology-laboratory consumable article (16) by the printing device (4), generates analogue or digital impression image signals relating to the impression (18) that has been read, and transfers the impression image signals to a control apparatus (8) of the printer, which determines at least one quality parameter relating to the impression (18).

2. Printer according to Claim 1, **characterized in that** the control apparatus (8) evaluates the received image-pattern image signals and/or impression image signals and dependent on the evaluation result establishes at least one processing step for the further processing of the histology-laboratory consumable article (16) inside the printer.

3. Printer according to Claim 2, **characterized in that**
a. in order to evaluate the received impression image signals, the control apparatus (8) compares the impression image signals received from the optical reading apparatus (13) with the analogue or digital image signals of a target impression image pattern, in particular by image analysis and/or pattern recognition, and/or **in that**
b. in order to evaluate the received image-pattern image signals, the control apparatus (8) compares the image signals received from the optical reading apparatus (13) with the image signals of at least one reference image pattern, in particular by image analysis and/or pattern recognition.

4. Printer according to any of Claims 1 to 3, **characterized in that**
a. the quality parameter relates to the sharpness of the impression (18), and/or **in that**
b. the quality parameter relates to the contrast of the impression (18), and/or **in that**
c. the quality parameter relates to the printing resolution of the impression (18), and/or **in that**
d. the quality parameter relates to the accuracy of the colour of the impression (18), and/or **in that**
e. the quality parameter relates to the constancy of the colour of the impression (18), and/or **in that**
f. the quality parameter relates to the colour gradient of the impression (18), and/or **in that**
g. the quality parameter relates to the location of the impression (18) on the histology-laboratory consumable article (16), and/or **in that**
h. the quality parameter relates to the presence of the impression (18) on the histology-laboratory consumable article (16).

5. Printer according to any of Claims 2 to 4, **characterized in that**
a. one of the processing steps involves requesting an input by a user, or **in that**
b. one of the processing steps involves requesting an input by a user, and **in that** the control apparatus (8) evaluates the input, and dependent on the input, deletes an already established processing step and/or establishes at least one further processing step for the further processing of the histology-laboratory consumable article (16), or **in that**
c. one of the processing steps involves requesting an input by a user, and **in that** the control apparatus (8) stops the processing of a histology-laboratory consumable article (16), in relation to which an input is expected, until the input arrives, and instead begins or continues the processing of at least one other histology-laboratory consumable article (16), or **in that**
d. one of the processing steps involves outputting a message to a user, or **in that**
e. one of the processing steps involves printing on the histology-laboratory consumable article (16).

6. Printer according to any of Claims 1 to 5, **characterized in that**
a. the control apparatus (8) determines where a printing field is located on the histology-laboratory consumable article (16) on the basis of the image-pattern image signals, and/or **in that**
b. the control apparatus (8) establishes at least one printing parameter to be adjusted dependent on the image-pattern image signals of the image pattern (18) that has been read.

7. Printer according to any of Claims 2 to 6, **characterized in that**
a. one of the processing steps involves discarding the histology-laboratory consumable article (16) without printing thereon, and/or **in that**
b. one of the processing steps involves repeating the printing of the target impression image pattern on another histology-laboratory consumable article (16), and/or **in that**
c. one of the processing steps involves repeating the printing of the target impression image pattern on another histology-laboratory consumable article (16), wherein the control apparatus (8) establishes at least one printing parameter for the repetition of the printing of the target impression image pattern on another histology-laboratory consumable article (16) dependent on the image signals of the impression (18) that has been read and/or dependent on a quality parameter determined relating to the impression (18).

8. Printer according to any of Claims 1 to 7, **characterized in that**
a. the control apparatus (8) in each case saves the received image-pattern image signals in a memory apparatus (12), and/or **in that**
b. one of the processing steps involves saving the image signals of the image pattern (18) that has been read and/or saving a piece of information determined by the control apparatus (8) about the histology-laboratory consumable article (16), and/or **in that**
c. the control apparatus (8) in each case saves the received impression image signals in a memory apparatus (12) or **in that** the control apparatus (8) in each case saves the received impression image signals together with the image signals of the associated target impression image pattern.

9. Printer according to any of Claims 1 to 8, **characterized in that** the optical reading apparatus (13) is configured and arranged to read an image pattern (18) configured as a barcode or as a QR code or as a logo or as text.

10. Printer according to any of Claims 1 to 9, **characterized in that**
a. the printer comprises a transport apparatus (3) which transports the histology-laboratory consumable articles (16), or **in that**
b. the printer comprises a transport apparatus (3) which transports the histology-laboratory consumable articles (16), and the printer comprises a compartment for a multiplicity of histology-laboratory consumable articles (16) to be printed on, from which the transport apparatus (3) individually takes the histology-laboratory consumable articles (16) to be printed on and transports them further to the printing device (4), or **in that**
c. the printer comprises a transport apparatus (3) which transports the histology-laboratory consumable articles (16), and the printer comprises a compartment for a multiplicity of histology-laboratory consumable articles (16) to be printed on, from which the transport apparatus (3) individually takes the histology-laboratory consumable articles (16) to be printed on and transports them further to the printing device (4), wherein the transport apparatus (3) transports the histology-laboratory consumable articles (16) printed on by the printing device (4) further, in particular to a removal device (7).

11. Printer according to Claims 9 and 10, **characterized in that**
a. during the transport to the printing device (4), the optical reading apparatus (13) in each case reads the image pattern (18) from a histology-laboratory consumable article (16) to be printed on, and/or **in that**
b. during the transport, the optical reading apparatus (13) in each case reads the impression (18) from the histology-laboratory consumable article (16) to be printed on.

12. Printer according to any of Claims 1 to 11, **characterized in that**
a. the printing device (4) is configured to apply an impression (18) configured as an image or as a barcode or as a QR code or as a logo or as text onto the histology-laboratory consumable article, and/or in that
b. the optical reading device (13) is configured and arranged to read an impression (18) configured as an image or as a barcode or as a QR code or as a logo or as text.

13. Printer according to any of Claims 1 to 12, **characterized in that**
a. the control apparatus (8) continuously keeps a log, or **in that**
b. the control apparatus (8) continuously keeps a log and, in particular continuously, saves log data in a memory and/or outputs them via an interface and/or displays them on an output device.

14. Printer according to any of Claims 1 to 13, **characterized in that**
a. the printer is configured as an inkjet printer or as a laser printer, and/or **in that**
b. the printer is configured as a cassette printer and/or as a slide printer and/or as a label printer.

15. Histology laboratory system, comprising a printer according to any of Claims 1 to 14 and a superordinate computer which
a. receives log data from the printer, or which
b. receives log data from the printer and further log data of other printers and/or other laboratory equipment, or which
c. receives log data from the printer and further log data of other printers and/or other laboratory equipment and in each case in a manner assigned to one another and together saves and/or further processes the log data and the further log data which relate to the same sample.

## Revendications

1. Imprimante comprenant un dispositif d'impression (4) permettant d'imprimer des articles de consommation pour laboratoire d'histologie (16), en particulier des cassettes (17) ou des lames porte-objets (19) ou des étiquettes, comprenant un dispositif de lecture optique (13), **caractérisée en ce que** le dispositif de lecture optique
a. lit un motif d'image d'un article de consommation pour laboratoire d'histologie (16) à imprimer au moyen du dispositif d'impression (4), génère des signaux d'image de motif d'image analogiques ou numériques concernant le motif d'image (18) lu et transmet les signaux d'image de motif d'image à un dispositif de commande (8) de l'imprimante, et/ou
b. lit une impression (18) imprimée par le dispositif d'impression (4) sur un article de consommation pour laboratoire d'histologie (16), génère des signaux d'image d'impression analogiques ou numériques concernant l'impression (18) lue et transmet les signaux d'image d'impression à un dispositif de commande (8) de l'imprimante, lequel détermine au moins un paramètre de qualité concernant l'impression (18).

2. Imprimante selon la revendication 1, **caractérisée en ce que** le dispositif de commande (8) évalue les signaux d'image de motif d'image et/ou les signaux d'image d'impression reçus et, en fonction du résultat de l'évaluation, définit au moins une étape de traitement pour le traitement ultérieur de l'article de consommation pour laboratoire d'histologie (16) à l'intérieur de l'imprimante.

3. Imprimante selon la revendication 2, **caractérisée en ce que**
a. le dispositif de commande (8), pour évaluer les signaux d'image d'impression reçus, compare les signaux d'image d'impression reçus par le dispositif de lecture optique (13) avec les signaux d'image analogiques ou numériques d'un modèle d'image d'impression nominal, en particulier par analyse d'image et/ou par reconnaissance de modèle, et/ou **en ce que**
b. le dispositif de commande (8), pour évaluer les signaux d'image de modèle d'image reçus, compare les signaux d'image reçus par le dispositif de lecture optique (13) avec les signaux d'image d'au moins un modèle d'image de référence, en particulier par analyse d'image et/ou par reconnaissance de modèle.

4. Imprimante selon l'une des revendications 1 à 3, **caractérisée en ce que**
a. le paramètre de qualité concerne la netteté de l'impression (18) et/ou que
b. le paramètre de qualité concerne le contraste de l'impression (18) et/ou **en ce que**
c. le paramètre de qualité concerne la résolution d'impression de l'impression (18) et/ou **en ce que**
d. le paramètre de qualité concerne l'exactitude de la couleur de l'impression (18) et/ou **en ce que**
e. le paramètre de qualité concerne la constance de la couleur de l'impression (18) et/ou **en ce que**
f. le paramètre de qualité concerne le dégradé de couleur de l'impression (18) et/ou **en ce que**
g. le paramètre de qualité concerne la position de l'impression (18) sur l'article de consommation pour laboratoire d'histologie (16) et/ou **en ce que**
h. le paramètre de qualité concerne la présence de l'impression (18) sur l'article de consommation pour laboratoire d'histologie (16).

5. Imprimante selon l'une des revendications 2 à 4, **caractérisée en ce que**
a. l'une des étapes de traitement comprend la demande d'une saisie à un utilisateur, ou **en ce que**
b. l'une des étapes de traitement comprend la demande d'une saisie à un utilisateur, et **en ce que** le dispositif de commande (8) évalue la saisie et, en fonction de la saisie, supprime une étape de traitement déjà définie et/ou définit au moins une autre étape de traitement pour le traitement ultérieur de l'article de consommation pour laboratoire d'histologie (16), ou **en ce que**
c. l'une des étapes de traitement comprend la demande d'une saisie à un utilisateur, et **en ce que** le dispositif de commande (8) arrête le traitement d'un article de consommation pour laboratoire d'histologie (16) pour lequel une saisie est attendue jusqu'à l'arrivée de la saisie et au lieu de cela, commence ou poursuit le traitement d'au moins un autre article de consommation pour laboratoire d'histologie (16), ou **en ce que**
d. l'une des étapes de traitement comprend l'envoi d'un message à un utilisateur, ou **en ce que**
e. l'une des étapes de traitement comprend l'impression de l'article de consommation pour laboratoire d'histologie (16).

6. Imprimante selon l'une des revendications 1 à 5, **caractérisée en ce que**
a. le dispositif de commande (8) détermine, sur la base des signaux d'image de modèle d'image, où se trouve un champ d'impression sur l'article de consommation pour laboratoire d'histologie (16), et/ou **en ce que**
b. le dispositif de commande (8) établit au moins un paramètre d'impression à définir en fonction des signaux d'image de motif d'image du motif d'image (18) lu.

7. Imprimante selon l'une des revendications 2 à 6, **caractérisée en ce que**
a. l'une des étapes de traitement comprend l'éjection de l'article de consommation pour laboratoire d'histologie (16) sans l'imprimer, et/ou **en ce que**
b. l'une des étapes de traitement comprend la répétition de l'impression du modèle d'image d'impression nominal sur un autre article de consommation pour laboratoire d'histologie (16), et/ou **en ce que**
c. l'une des étapes de traitement comprend la répétition de l'impression du modèle d'image d'impression nominal sur un autre article de consommation pour laboratoire d'histologie (16), le dispositif de commande (8) établissant, en fonction des signaux d'image de l'impression (18) lue et/ou en fonction d'un paramètre de qualité déterminé concernant l'impression (18), au moins un paramètre d'impression pour la répétition de l'impression du modèle d'image d'impression nominal sur un autre article de consommation pour laboratoire d'histologie (16).

8. Imprimante selon l'une des revendications 1 à 7, **caractérisée en ce que**
a. le dispositif de commande (8) mémorise respectivement les signaux d'image de modèle d'image reçus dans un dispositif de mémoire (12), et/ou **en ce que**
b. l'une des étapes de traitement comprend le stockage des signaux d'image du motif d'image (18) lu et/ou le stockage d'une information déterminée par le dispositif de commande (8) concernant l'article de consommation pour laboratoire d'histologie (16), et/ou **en ce que**
c. le dispositif de commande (8) mémorise respectivement les signaux d'image d'impression reçus dans un dispositif de mémoire (12) ou **en ce que** le dispositif de commande (8) mémorise les signaux d'image d'impression reçus respectivement en association avec les signaux d'image du modèle d'image d'impression nominal correspondant.

9. Imprimante selon l'une des revendications 1 à 8, **caractérisée en ce que** le dispositif de lecture optique (13) est conçu et agencé pour lire un motif d'image (18) conçu sous forme de code à barres ou de code QR ou de logo ou de lettrage.

10. Imprimante selon l'une des revendications 1 à 9, **caractérisée en ce que**
a. l'imprimante comporte un dispositif de transport (3) qui transporte les articles de consommation pour laboratoire d'histologie (16), ou **en ce que**
b. l'imprimante comporte un dispositif de transport (3) qui transporte les articles de consommation pour laboratoire d'histologie (16), et l'imprimante présente un logement pour une pluralité d'articles de consommation pour laboratoire d'histologie (16) à imprimer, à partir duquel le dispositif de transport (3) prélève individuellement les articles de consommation pour laboratoire d'histologie (16) à imprimer et les emporte vers le dispositif d'impression (4), ou **en ce que**
c. l'imprimante comporte un dispositif de transport (3) qui transporte les articles de consommation pour laboratoire d'histologie (16), et l'imprimante présente un logement pour une pluralité d'articles de consommation pour laboratoire d'histologie (16) à imprimer, à partir duquel le dispositif de transport (3) prélève individuellement les articles de consommation pour laboratoire d'histologie (16) à imprimer et les emporte vers le dispositif d'impression (4), le dispositif de transport (3) emportant les articles de consommation pour laboratoire d'histologie (16) imprimés par le dispositif d'impression (4), en particulier vers un dispositif de prélèvement (7).

11. Imprimante selon les revendications 9 et 10, **caractérisée en ce que**
a. le dispositif de lecture optique (13) lit respectivement le modèle d'image (18) pendant le transport vers le dispositif d'impression (4) d'un article de consommation pour laboratoire d'histologie (16) à imprimer, et/ou **en ce que**
b. le dispositif de lecture optique (13) lit respectivement l'impression (18) pendant le transport de l'article de consommation pour laboratoire d'histologie (16) imprimé.

12. Imprimante selon l'une des revendications 1 à 11, **caractérisée en ce que**
a. le dispositif d'impression (4) est conçu pour appliquer sur l'article de consommation pour laboratoire d'histologie une impression (18) conçue sous forme d'image ou de code à barres ou de code QR ou de logo ou de lettrage, et/ou **en ce que**
b. le dispositif de lecture optique (13) est conçu et agencé pour lire une impression (18) conçue sous forme d'image ou de code à barres ou de code QR ou de logo ou de lettrage.

13. Imprimante selon l'une des revendications 1 à 12, **caractérisée en ce que**
a. le dispositif de commande (8) conserve en permanence un journal, ou **en ce que**
b. le dispositif de commande (8) conserve en permanence un journal et enregistre, en particulier en permanence, des données de journal dans une mémoire et/ou les délivre par l'intermédiaire d'une interface et/ou les affiche sur un dispositif de sortie.

14. Imprimante selon l'une des revendications 1 à 13, **caractérisée en ce que**
a. l'imprimante est conçue sous forme d'imprimante à jet d'encre ou d'imprimante laser, et/ou **en ce que**
b. l'imprimante est conçue sous forme d'imprimante de cassettes et/ou sous forme d'imprimante de lames porte-objets et/ou sous forme d'imprimante d'étiquettes.

15. Système pour laboratoire d'histologie, qui comprend une imprimante selon l'une des revendications 1 à 14 ainsi qu'un ordinateur de niveau supérieur qui
a. reçoit des données de journal de l'imprimante, ou qui
b. reçoit des données de journal de l'imprimante et d'autres données de journal d'autres imprimantes et/ou d'autres appareils de laboratoire, ou qui
c. reçoit des données de journal de l'imprimante et d'autres données de journal d'autres imprimantes et/ou d'autres appareils de laboratoire et associe respectivement les données de journal et les autres données de journal concernant le même échantillon et les stocke et/ou les traite ensemble.
